# EUROPEAN PATENT SPECIFICATION

(11) **EP 2 960 785 B1**
(45) Date of publication and mention of the grant of the patent: **01.04.2020**
(21) Application number: 15167222.7
(22) Date of filing: 11.05.2015
(51) Int. Cl.: G06F 9/48, G06T 1/60

(54) **TECHNIQUES TO COMPOSE MEMORY RESOURCES ACROSS DEVICES AND REDUCE TRANSITIONAL LATENCY**
VERFAHREN ZUR BILDUNG VON SPEICHERRESSOURCEN ÜBER VORRICHTUNGEN HINWEG UND ZUR REDUZIERUNG VON ÜBERGANGSLATENZ
TECHNIQUES PERMETTANT DE COMPOSER DES RESSOURCES EN MEMOIRE ENTRE DES DISPOSITIFS ET DE REDUIRE LA LATENCE DE TRANSITION

(30) Priority: 25.06.2014 US 201414314940
(43) Date of publication of application: 30.12.2015
(73) Proprietor: Intel Corporation, Santa Clara, CA 95054 (US)
(72) Inventor: Al-Otoom, Doa'a M., Hillsboro, OR Oregon 97124 (US); Abou Gazala, Neven M., Newcastle, Washington 98059 (US); Diefenbaugh, Paul S., Portland, OR Oregon 97229 (US)
(74) Representative: HGF Limited

(56) References cited:
- US-A1- 2010 057 881
- US-A1- 2011 083 130
- US-A1- 2012 096 069
- US-A1- 2013 036 270
- US-A1- 2013 041 790
- US-A1- 2013 325 967

## Description

### TECHNICAL FIELD

Examples described herein are generally related to aggregating resources across computing devices.

### BACKGROUND

Computing devices in various form factors are being developed that include increasing amounts of computing power, networking capabilities and memory/storage capacities. Some form factors attempt to be small and/or light enough to actually be worn by a user. For example, eyewear, wrist bands, necklaces or other types of wearable form factors are being considered as possible form factors for computing devices. Additionally, mobile form factors such as smart phones or tablets have greatly increased computing and networking capabilities and their use has grown exponentially over recent years.

Reference is made to US 2013/0325967 A1, which discloses a first client device or system that performs a method that includes retaining in memory registration information for a respective application indicating the respective application is registered for sharing application state with other client devices or systems. The method further includes storing an application state of a respective application, and detecting a transfer triggering condition. The transfer triggering condition includes presence of a second client device or system within a predefined proximity of the first client device or system, and the predefined proximity is a predefined proximity for near field communication. Furthermore, upon detecting the triggering condition, the first client device or system determines, in accordance with the stored registration information, that the respective application is registered for application state sharing, and transmits the application state of the respective application to the second client device or system.

### BRIEF DESCRIPTION OF THE DRAWINGS

FIG. 1 illustrates an example of a first system.
FIG. 2 illustrates an example of a second system.
FIG. 3 illustrates an example of a third system.
FIG. 4 illustrates an example first logic flow.
FIG. 5 illustrates an example first process.
FIG. 6 illustrates an example second process.
FIG. 7 illustrates an example chart for determining a threshold.
FIG. 8 illustrates an example block diagram for a first apparatus.
FIG. 9 illustrates an example of a second logic flow.
FIG. 10 illustrates an example of a first storage medium.
FIG. 11 illustrates an example block diagram for a second apparatus.
FIG. 12 illustrates an example of a third logic flow.
FIG. 13 illustrates an example of a second storage medium.
FIG. 14 illustrates an example of a device.

### DETAILED DESCRIPTION

Examples are generally directed to improvements for aggregating compute, memory and input/output (I/O) resources across devices. Aggregation across devices such as computing devices may be influenced by possibly utilizing multiple computing devices that may each have different functionality and/or capabilities. For example, some computing devices may be small enough for a user to actually wear the computing device. Other types of small form factor computing devices may include smart phones or tablets where size/weight and a long battery life are desirable traits for users of these devices. Hence, wearable, smart phone or tablet computing devices may each be relatively light weight and may use low amounts of power to extend battery life. Yet users may expect greater computational capabilities that may not be possible in these small form factors.

Other types of computing devices may be somewhat stationary and may therefore have a larger form factor that is powered by a fixed power source or a comparatively larger battery compared to wearable, smart phone or tablet computing devices. These other computing devices may include desktop computers, laptops, or all-in-one computers having an integrated, large format (e.g., greater than 15 inches) display. The large form factor of these other devices and the use of a fixed power source (e.g., via a power outlet) or a large battery power source may allow for considerably more computing, memory or I/O resources to be included with or attached to these form factors. In particular, a higher thermal capacity associated with a larger form factor along with possible use of active cooling (e.g., via one or more fans) may allow for the considerably more computing, memory or I/O resources as compared to smaller form factors.

In contrast, wearable, smart phone or tablet computing devices, as mentioned are in relatively small form factors that depend on battery power and likely do not have active cooling capabilities. Also, power circuitry and use of a battery may reduce current-carrying capacity of these types of devices. A reduced current-carrying capacity may restrict types of potentially powerful computing resources from being implemented in these smaller form factors. Further, higher costs and/or space constraints may result in relatively low amounts of some types of memory resources such as double data rate synchronous dynamic random-access memory (DDR SRAM) memory.

Aggregation of memory resources across computing devices having different memory capabilities may be a desirable objective. Current attempts to aggregate memory resources across computing devices such as mobile/client computing devices have relied primarily on software implementations due to a lack of similar hardware configurations and power issues. These types of software implementations usually result in high migration latencies and degraded user experience. For example, user-perceptible delays associated with software implementations may result when streaming high-definition video or gaming information between aggregating devices such as a smart phone and an all-in-one computer. The user-perceptible delays at time of migration may result in a choppy or stalled video as memory resources are aggregated between the devices via a full migration process. Thus a seamless aggregation of memory resources across multiple computing devices may be problematic when relying primarily on software implementations for the aggregation.

An example solution to reduce delays is use of a type of hierarchical memory architecture such as a two-level memory (2LM) architecture composed of a fast, low capacity near memory (e.g., dynamic random access memory (DRAM) or DDR SRAM and a relatively slower, larger capacity far memory (e.g., NAND flash or other types of non-volatile or volatile memory). For this solution, a first near memory and a far memory may be maintained at a small form factor computing device (e.g., a source device) and second near memory maintained at a larger form factor computing device (e.g., a target device). Also, the source device may have relatively less computing resources and the first near memory may have less capacity compared to the target device's computing resources and second near memory. Also, for this solution, a far memory channel may be established through a wired or wireless interconnect via which memory contents and a computational state associated with computing resources executing one or more applications may be flushed from the first near memory at the source device, routed through the far memory and migrated to the second near memory at the target device. Computing resources at the target device may then resume execution of the one or more applications once computational states and the memory contents are migrated. Use of this type of hierarchical memory architecture may allow for the execution of the one or more applications to be transferred between the source and target device in a manner fully or partially transparent to an operating system (OS).

The above-mentioned example solution may work well for initial docking of the source device with the target device. The example solution may work well due to a relatively small first near memory at the source device that can be flushed fairly quickly when routed through the larger but slower far memory and then migrated to the second near memory. However, while the one or more applications are executed by the computing resources at the target device, the larger second near memory and greater computing resources may generate a large amount of dirty blocks that may cause latency issues when the source device begins to undock from the target device and needs to flush a large amount of data that is routed through the slow/high latency far memory. This may be somewhat mitigated by periodically sending data copied from dirty blocks to the far memory while the devices are docked together to reduce the amount of data that needs to be migrated at time of undocking. But a major drawback to periodically sending data copied from dirty blocks may be that frequency of these periodic updates may be constrained by high far memory write latencies characteristic of non-volatile memories and by power usage and bandwidth constraints associated with the wired or wireless interconnect over which the data is received to the far memory via the far memory channel. So even if the amount of data periodically sent reduces the amount that may need to be migrated to the source device at undocking that amount may not be sufficient to significantly reduce user noticeable transitional latencies at the time of undocking. It is with respect to these and other challenges that the examples described herein are needed.

According to some examples, example first methods may be implemented at a first device (source device) having a first circuitry, e.g., processing element(s) and/or graphic engine(s). For these examples, the first circuitry may be capable of executing the one or more applications using a hierarchical memory architecture that includes a first near memory and a first far memory maintained at the first device. Also, for these examples, a second device (target device) having second circuitry may be detected. The second circuitry may be capable of executing the one or more applications using the hierarchical memory architecture that also includes a second near memory maintained at the second device. Also, for these examples, memory contents and a computational state associated with the first circuitry's execution of the one or more applications may be migrated over a wired or wireless interconnect. The memory contents and the computational state may be migrated for the second circuitry to execute the one or more applications. Also, for these examples, the first near memory may then be configured to function as a buffer capable of periodically receiving, over the wired or wireless interconnect, data copied from dirty blocks at the second near memory.

According to some examples, example second methods may be implemented at a first device (target device) having a first circuitry. For these examples, an indication may be detected that a second device having second circuitry has connected to the first device via a wired or wireless interconnect. The first and the second circuitry may each be capable of executing one or more applications using a hierarchical memory architecture having a near memory and a far memory. Also, for these examples, a copy of memory contents and a computational state associated with the second circuitry's execution of the one or more applications may be received over the wired or wireless interconnect. The copy of memory contents and the computational state may be received from a second near memory at the second device over the wired or wireless interconnect. Also, for these examples, the copy of memory contents and the computational state may be stored to a first near memory at the first device for the first circuitry to execute the one or more applications. Then, on a periodic basis, data copied from dirty blocks at the first near memory may be sent to the second near memory over the wired or wireless interconnect.

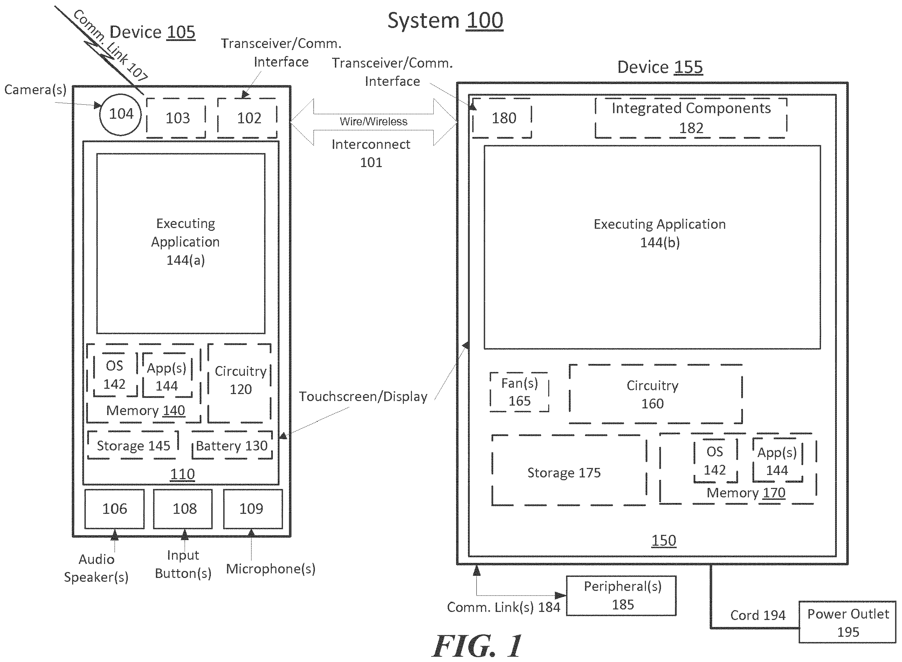

**FIG. 1** illustrates an example first system. In some examples, the example first system includes system 100. System 100, as shown in FIG. 1, includes a device 105 and a device 155. According to some examples, devices 105 and 155 may represent two examples of different form factors for computing devices. As described more below, device 105 may be a smaller form factor that may operate primarily off battery power while device 155 may be a relatively larger form factor that may operate primarily off a fixed power source such as an alternating current (A/C) received via a power outlet associated, for example, with power purchased from a power utility. Although not shown in FIG. 1, in some examples, device 105 may be coupled to an A/C power outlet while device 155 may operate primarily off battery power via a battery (not shown).

In some examples, device 105 is shown in FIG. 1 as observed from a front side that may correspond to a side of device 105 that includes a touchscreen/display 110 that may present a view of executing application(s) 144(a) to a user of device 105. Similarly, device 155 is shown in FIG. 1 as observed from a front side that includes a touchscreen/display 150 that may present a view of executing application 144(b) to a user of device 155. Although, in some examples, a display may also exist on back side of device 105 or device 155, for ease of explanation, FIG. 1 does not include a back side display for either device.

According to some examples, the front side views of devices 105 and 155 include elements/features that may be at least partially visible to a user when viewing these devices from a front view. Also, some elements/features may not be visible to the user when viewing devices 105 or 155 from a front side view. For these examples, solid-lined boxes may represent those features that may be at least partially visible and dashed-line boxes may represent those element/features that may not be visible to the user (e.g., underneath a skin or cover). For example, transceiver/communication (comm.) interfaces 102 and 180 may not be visible to the user, yet at least a portion of camera(s) 104, audio speaker(s) 106, input button(s) 108, microphone(s) 109 or touchscreen/display 110 may be visible to the user.

According to some examples, as shown in FIG. 1, a comm. link 107 may wirelessly couple device 100 via interface 103. For these examples, interface 103 may be configured and/or capable of operating in compliance with one or more wireless communication standards to establish either a network connection with a network (not shown) via comm. link 107 or a direct device-to-device connection with another device (not shown) via comm. link 107. The network or direct connection may enable device 105 to receive/transmit data and/or enable voice communications through either the network or the other device.

In some examples, various elements/features of device 105 may be capable of providing sensor information associated with detected input commands (e.g., user gestures or audio command). For example, touch screen/display 110 may detect touch gestures. Camera(s) 104 may detect spatial/air gestures or pattern/object recognition. Microphone(s) 109 may detect audio commands. In some examples, a detected input command may be to affect executing application 144(a) and may be interpreted as a natural UI input event. Although not shown in FIG. 1 a physical keyboard or keypad may also receive input command that may affect executing application(s) 144(a).

According to some examples, as shown in FIG. 1, device 105 may include circuitry 120, a battery 130, a memory 140 and a storage 145. Circuitry 120 may include one or more processing elements and graphic engines capable of executing App(s) 144 at least temporarily maintained in memory 140. Also, circuitry 120 may be capable of executing operating system (OS) 142 which may also be at least temporarily maintained in memory 140.

In some examples, as shown in FIG. 1, device 155 may include circuitry 160, storage 175, memory 170 and transceiver/comm. interface 180. Device 155 may also include fan(s) 165 which may provide active cooling to components of device 155. Also, as shown in FIG. 1, device 155 may include integrated components 182. Integrated components 182 may include various I/O devices such as, but not limited to, cameras, microphones, speakers or sensors that may be integrated with device 155.

According to some examples, as shown in FIG. 1, device 155 may be coupled to a power outlet 195 via a cord 194. For these examples, device 155 may receive a fixed source of power (e.g., A/C power) via the coupling to power outlet 195 via cord 194.

In some examples, as shown in FIG. 1, device 155 may couple to peripheral(s) 185 via comm. link 184. For these examples, peripheral(s) 185 may include, but are not limited to, monitors, displays, external storage devices, speakers, microphones, game controllers, cameras, I/O input devices such as a keyboard, a mouse, a trackball or stylus.

According to some examples, logic and/or features of device 105 may be capable of detecting device 155. For example, transceiver/comm. interfaces 102 and 180 may each include wired and/or wireless interfaces that may enable device 105 to establish a wired/wireless communication channel to connect with device 155 via interconnect 101. In some examples, device 105 may physically connect to a wired interface (e.g., in docking station or a dongle) coupled to device 155. In other examples, device 105 may come within a given physical proximity that may enable device 105 to establish a wireless connection such as a wireless docking with device 155. Responsive to the wired or wireless connection, information may be exchanged that may enable device 105 to detect device 155 and also to determine at least some capabilities of device 155 such as circuitry available for executing App(s) 144.

In some examples wired and/or wireless interfaces included in transceiver/comm. interfaces 102 and 180 may operate in compliance with one or more low latency, high bandwidth and efficient interconnect technologies. Wired interconnect technologies may include, but are not limited to, those associated with industry standards or specifications (including progenies or variants) to include the Peripheral Component Interconnect (PCI) Express Base Specification, revision 3.0, published in November 2010 ("PCI Express" or "PCIe"), the Universal Serial Bus (USB) Specification, version 3.1, published in July 2013 ("USB3.1) or interconnects similar to Intel® QuickPath Interconnect ("QPI"). Wireless interconnect technologies may include, but are not limited to, those associated with WiGig™,Wi-Fi™ Bluetooth™ or Bluetooth Low Energy™ (BLE) and may include establishing and/or maintaining wireless communication channels through various frequency bands to include Wi-Fi and/or WiGig frequency bands, e.g., 2.4, 5 or 60 GHz. These types of wireless interconnect technologies may be described in various standards promulgated by the Institute of Electrical and Electronic Engineers (IEEE). These standards may include Ethernet wireless standards (including progenies and variants) associated with the IEEE Standard for Information technology - Telecommunications and information exchange between systems-Local and metropolitan area networks-Specific requirements Part 11: WLAN Media Access Controller (MAC) and Physical Layer (PHY) Specifications, published March 2012, and/or later versions of this standard ("IEEE 802.11"). One such standard related to WiFi and WiGig as well as being related to wireless docking is IEEE 802.11ad.

According to some examples, circuitry 160 may include one or more processing elements and graphics engines capable of executing OS 142 which may also be at temporarily maintained at memory 170. Circuitry 160 may also be capable of executing App(s) 144 also at least temporarily maintained at memory 170. In some examples, a first computational state and first memory contents associated with executing applications such as App(s) 144 or OS 142 may be sent from logic and/or features of device 105 via interconnect 101. The computational state and memory contents may enable circuitry 160 to take over or resume execution of App(s) 144 and/or OS 142 from circuitry 120. The computational state and the memory contents may be flushed from one or more caches (e.g., processor cache(s)) used by circuitry 120 to execute App(s) 144 and/or OS 142. The computational state and memory contents included in memory 140 (e.g., a near memory) may then be sent to a second near memory at device 155 (e.g., included in memory 170). The second near memory now having the computational state and the memory contents may enable circuitry 160 to execute App(s) 144 which may result in a presentation of that execution on display 150 as executing application 144(b).

In some examples, App(s) 144 may include types of applications that a user of device 105 may desire to utilize increased computing, memory or I/O resources available at device 155. For example, due to active cooling, a fixed power source and a larger form factor, circuitry 160 may include a significantly higher amount of computing power and/or memory resources than circuitry 120. In terms of higher computing power this may be due, at least in part, to a higher thermal capacity for dissipating heat from circuitry 160 via use of fan(s) 165 and also to greater surface areas to dissipate heat via passive means such as large heat sinks or heat pipes. Thus, circuitry 160 can operate within a significantly higher thermal range. Also, in terms of higher memory resources, a large form factor may allow for additional memory modules. Further, receiving power via power outlet 195 may allow device 155 to provide a significantly higher current-carry capacity to circuitry 160 and/or memory 170. A higher current-carrying capacity may enable circuitry 160 and/or memory 170 to more quickly respond to rapid bursts of computing demand that may be common with some types of applications such as interactive gaming or video editing.

App(s) 144 may also include types of applications such as high definition streaming video applications (e.g., having at least 4K resolution) to be presented on larger displays or other types of high resolution display screens, regardless of display size. For example, circuitry 120 may be adequate for presenting high definition video on a relatively small touchscreen/display 110 but a larger or higher resolution touchscreen/display 150 may exceed the capability of circuitry 120 and/or the thermal capacity of device 105. Thus, circuitry 160 may be utilized to execute these types of applications to present the high definition streaming to the larger or higher resolution touchscreen/display 150 or to an even larger and/or multiple displays possibly included in peripheral(s) 185.

App(s) 144 may also include a touch screen application capable of being used on large or small displays. For example, the touch screen application may be executed by circuitry 160 to present larger sized and/or higher resolution touch screen images to touchscreen/display 150. Also, the touch screen application may be able to mirror touch screen images on multiple screens. For example, a portion of the touch screen application may be implemented by circuitry 120 to present executing application 144(a) to touchscreen/display 110 and another portion may be implemented by circuitry 160 to present executing application 144(b) to touchscreen/display 150. For this example, coherency information may be exchanged between circuitry 120 and circuitries 160 via interconnect 101 to enable the joint execution of the touch screen application.

According to some examples, logic and/or features at device 105 may be capable of migrating a copy of memory contents included in memory 140 to memory 170 as well as a computational state associated with executing App(s) 144. Once a copy of memory contents and the computations state are migrated to memory 170, circuitry 160 may use the copy of memory contents and the computational state to resume execution of App(s) 144. For these examples, the copy of memory contents and the computational state may be migrated in a manner that may be fully or partially transparent to at least OS 142 executed by circuitry at either device 105 or device 155. As described more below, use of a hierarchical memory architecture such as a two-level memory (2LM) architecture that includes near memories separately maintained at two devices and a far memory maintained at least one of the two devices may be used to migrate the copy of memory contents and the computational state. The two near memories and the one far memory may be composed so that an OS such as OS 142 or an application such as App(s) 144 may not be aware of which device is actually executing the OS or application. As a result, migration of the one or more copies of memory content between the separately maintained near memories may be at least partially or fully transparent to the OS or application.

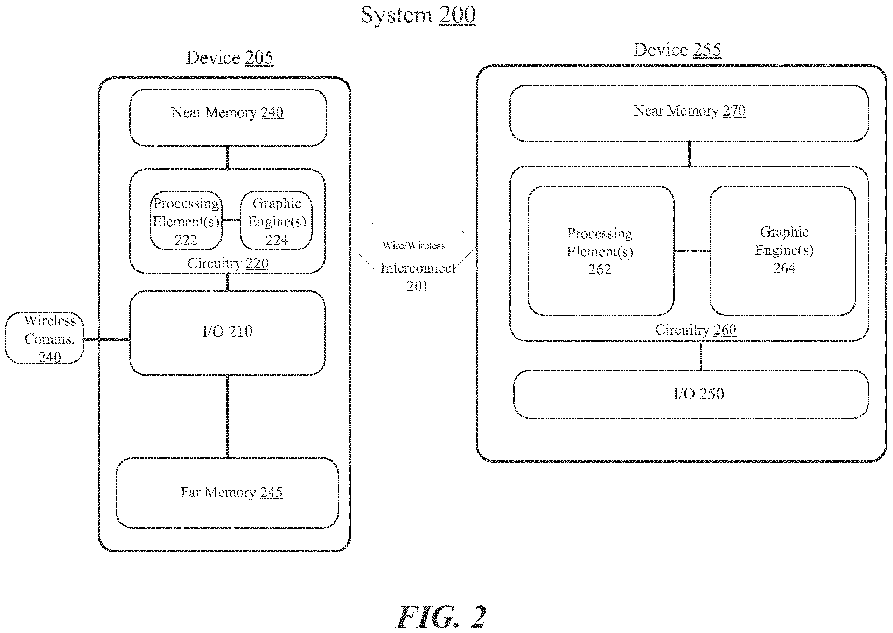

**FIG. 2** illustrates an example second system. In some examples, the example second system includes system 200. System 200 as shown in FIG. 2 includes various components of a device 205 and a device 255. According to some examples, components of device 205 may be coupled to components of device 255 via an interconnect 201. Similar to device 105 and 155 mentioned above for FIG. 1, interconnect 201 may be established via wired or wireless communication channels through wired and/or wireless interfaces operating in compliance with various interconnect technologies and/or standards. As a result, interconnect 201 may represent a low latency, high bandwidth and efficient interconnect to allow for computing, memory or I/O resources to be aggregated or composed between at least some components of devices 205 and 255.

In some examples, as shown in FIG. 2, device 205 may have circuitry 220 that includes processing element(s) 222 and graphic engine(s) 224. These elements of circuitry 220 may be capable of executing one or more applications similar to App(s) 144 mentioned above for FIG. 1. Also, device 255 may have circuitry 260 that includes processing element(s) 262 and graphic engine(s) 264. The relative sizes of the elements of circuitry 220 or near memory 240 as depicted in FIG. 2 compared to circuitry 260 or near memory 270 may represent increased computational abilities or memory resources for device 255 compared to device 205. These increased computation abilities or memory resources may be attributed, at least in part, to the various examples given above for device 155 when compared to device 105 (e.g., fixed power source, higher thermal capacity, high current-carrying capacity, larger form factor, etc.).

According to some examples, in addition to a low latency, high bandwidth and efficient interconnect, a hierarchical memory architecture (e.g., a 2LM architecture) that include a near and far memory may be implemented at device 205 and device 255 to facilitate a quick and efficient exchange of context information or computational states as well as memory contents for an application being executed by circuitry 220 to be offloaded for execution by circuitry 260 in a somewhat seamless manner (e.g., occurs in a fraction of a second). For example, near memory 240 at device 205 may include low latency/higher performance types of memory such as DDR SRAM. Also near memory 270 at device 255 may include similar types of memory. As part of the 2LM architecture, far memory 245 may include higher latency/lower performance types of memory such as, but not limited to, one or more of 3-D cross-point memory, NAND flash memory, NOR flash memory, ferroelectric memory, silicon-oxide-nitride-oxide-silicon (SONOS) memory, polymer memory such as ferroelectric polymer memory, ferroelectric transistor random access memory (FeTRAM) or FeRAM) or ovonic memory. According to some examples, an OS for device 205 or 255 and the application to be executed by either circuitry 220 or 260 may recognize far memory 245 as system memory and near memories 240 and 270 may serve as caches to far memory 245 for use by circuitry 220 and 260 when executing the application.

In some examples, following establishment of interconnect 201, logic and/or features of device 205 may determine that an application being executed by circuitry 220 can be executed by circuitry 260 at device 255. For these examples, the logic and/or features of device 205 may migrate a copy of memory contents and a computational state associated with circuitry 220 executing the application from near memory 240 to near memory 270 via interconnect 201. Once the copy of memory contents and the computational state are migrated to near memory 240, the memory contents and the computational state may be used by circuitry 260 to resume execution of the application.

According to some examples, logic and/or features at device 205 may then route I/O information associated with circuitry 260 now executing the application. For these examples, the at least portion of far memory 245 serving as part of the hierarchical memory architecture for device 205 may facilitate this routing of I/O information such that an OS for device 205 and/or device 255 may not be aware of which near memory at device 205 or device 255 is being used. As a result, the routing of the I/O information between device 205 and device 255 may be done in manner that is at least partially or fully transparent to the OS for device 205 and/or device 255.

In some examples, the hierarchical memory architecture implemented at both device 205 and device 255 may enable device 205 to use substantially less power by not having to maintain operating power levels for near memory 240 for executing the application once a copy of memory content is migrated to near memory 270. As described more below, near memory 240 may be configured as a midstream buffer and then powered down to a lower power state such as a self-refresh mode following migration and may occasionally power up to an operational state to receive data sent from near memory 270, e.g., copied from dirty blocks or associated with memory requests. Further, additional power may be saved by logic and/or features of device 205 powering down circuitry 220 to a sleep or similar type of lower power state following the migration. Other components of device 205 may remain powered such a wireless comms. 240, I/O 210 and a memory controller for far memory 245 (not shown). But these other components may use a considerably less amount of power and thus device 205 may conserve a significant amount of battery power.

Although not shown in FIG. 2, in some examples, a far memory may also be maintained at device 255. For these examples, the far memory at device 255 may serve as a type of cache to compensate for potential latency issues associated with interconnect 201. Also, the far memory at device 255 may allow logic and/or features of device 255 to use both near memory 270 and the far memory at device 255 to support varying memory aperture sizes to be configured during connection with device 205. Thus, near level memory 270 may be dynamically sized to match a capacity to receive a migrated copy of memory contents from near level memory 240. Also, the far memory at device 255 may serve a similar function as part of a hierarchical memory architecture such as far memory 245 does for device 205. For example, if execution of applications on device 255 is to be migrated to device 205, the far memory at device 255 along with the near memories 270/240 may be a part of this hierarchical memory architecture.

According to some examples, as shown in FIG. 2, wireless comms. 240 may couple to device 205. For these examples, wireless comms. 240 may be means via which device 205 may serve as a tether for device 255 to either a wireless network or another device. This may occur through various type of wireless communication channels such as a Bluetooth, BLE, WiFi, WiGig or a broadband wireless/4G wireless communication channel. I/O information associated with execution of the application may be received via these types of wireless communication channels. For example, high definition video may be streamed through a 4G wireless communication channel associated with a subscription or user account to access a 4G wireless network using device 205 but not device 255. For these examples, I/O 210 may be capable of receiving the streaming video information through wireless comms. 240 and at least temporarily store the streaming video at far memory 245. Logic and/or features at device 205 may then route this I/O information via interconnect 201 to near memory 270 for execution of a video display application by circuitry 260. Logic and/or features at device 205 may then cause the high definition video to be presented to a display (not shown) coupled to device 255 through I/O 250.

In some examples, logic and/or features of device 205 may receive an indication that the connection to device 255 via interconnect 201 is to be terminated. For example, a user of device 255 and/or 205 may indicate via an input command (e.g., detected via keyboard or natural UI input event) that device 205 is about to be physically disconnected from a wired communication channel. Alternatively, if interconnect 201 is through a wireless communication channel, logic and/or features of device 205 may detect movement of device 205 in a manner that may result in device 205 moving outside of a given physical proximity to device 255. The given proximity may be a range which device 205 may maintain an adequate wireless communication channel to exchange information via interconnect 201.

According to some examples, responsive to receiving the indication of a pending termination of interconnect 201, logic and/or features of device 205 may cause circuitry 220 and near memory 240 to power back up to an operational power state. As mentioned above, these components of device 205 may have been powered down following the migration of a copy of memory contents and a computational state to near memory 270. For these examples, logic and/or features of device 255 may cause a second computational state and a second copy of memory contents associated with executing an application at circuitry 260 maintained in near memory 270 to be sent to near memory 240 via interconnect 201. Once the second computational state and the second copy of memory contents are received at near memory 240, at least a portion of the second copy of memory contents may be stored to far memory 245. Circuitry 220 may then use the second computational state and at least a portion of the second copy of memory contents to resume execution of the application. In some examples, logic and/or features at device 255 may then power down circuitry 260 and near memory 270 following the sending of the second computational state and the second copy of memory contents to near memory 240 via interconnect 201.

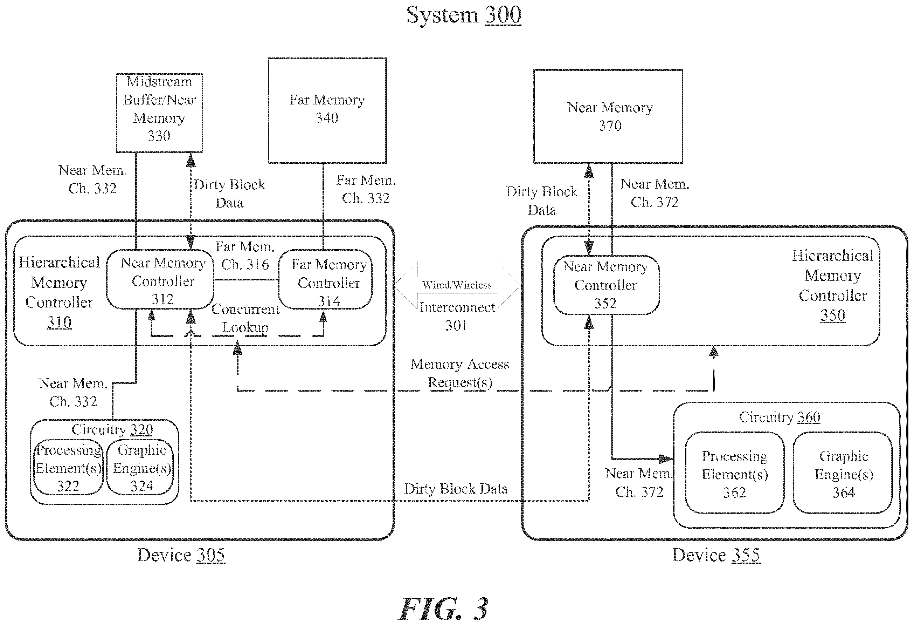

**FIG. 3** illustrates an example third system. In some examples, the example third system includes system 300. System 300 as shown in FIG. 3 includes various components of a device 305 and a device 355. The various components include some similar components to those mentioned above for device 205 and device 255 for system 200 in FIG. 2. Namely, Devices 305 and 355 have respective circuitry 320 and 360 that include respective processing element(s) 322/362 and graphic(s) engines 324/364. Also, as shown in FIG. 3, devices 305 and 355 may include separate near memories 330 and 370 and device 305 has a far memory 340. As described more below, in some examples, near memory 330 may be configured to serve as a midstream buffer to facilitate migration of memory contents between the two near memories and to periodically receive dirty block data.

According to some examples, as shown in FIG. 3, devices 305 and 355 may include respective hierarchical memory controllers 310 and 350. For these examples, interconnect 301 may be a low latency, high bandwidth, wireless or wired interconnect to couple device 305 to device 355 to enable communication between these hierarchical memory controllers. As described in more detail below, near memory 330 may be part of a hierarchical memory architecture such as a 2LM architecture that facilitates migration of one or more copies of memory contents between near memory 330 and near memory 370 in a manner that may be partially or fully transparent to an OS for device 305 or 355. In other words, the OS may not be aware of which device may be executing one or more applications as a computational state and a copy of memory contents associated with executing the one or more applications are migrated between near memory 330 used by circuitry 320 to near memory 370 used by circuitry 360. The transparency may be based on the hierarchical memory architecture implemented in a way such that far memory 340 may be presented to the OS as system main memory and near memories 330 and 370 may serve as caches to far memory 340 for use by respective circuitry 320 and 360 when executing the one or more applications. As a result, the OS may only be aware of far memory 340 and is unaware of the migration of the computational state and the copy of memory contents between the two near memories.

In some examples, near memory 370 may include a first memory capacity that is substantially larger than a second memory capacity for near memory 330. For example, near memory 320 may have a memory capacity of less than a gigabyte and near memory 370 may have a memory capacity of several gigabytes. The memory capacity differential may be due to a larger form factor size of device 355 and also due to greater computational resources included in circuitry 360 compared to circuitry 320 that may lead to a higher need for more memory capacity to match the greater computational resources. The examples are not limited to only these two reasons for possible memory capacity differences.

According to some examples, since circuitry 320 and circuitry 360 are both capable of executing applications using a hierarchical memory architecture, a size differential between near memories 330 and 370 may be accommodated by ensuring a memory capacity for far memory 340 is equal to or greater than the memory capacity of near memory 370. For these examples, far memory 340 may be composed of types of memory that may have higher write access latencies but may use substantially less power and cost substantially less per gigabyte of memory capacity compared to types of memory possibly used for near memories 330 or 370. The lower cost and less power usage may enable a substantially larger memory capacity for far memory 340 compared to near memory 330.

In some examples, via use of a hierarchical memory architecture, an OS for devices 305 and 355 may be arranged to be executed by circuitry 320 or 360 based on a memory capacity associated with far memory 340 that is at least equal to a memory capacity for near memory 370. For these examples, migration of execution of applications from device 305 to device 355 may be facilitated by the OS not having to resize/translate memory addressing structures to account for potentially different memory capacities associated with near memories 330 and 370. The memory addressing scheme used by an OS when executed by circuitry 320 may be designed such that significantly larger near memories used by other circuitry such as near memory 370 used by circuitry 360 can better utilize large memory capacities. For example, if the OS was to use only a memory addressing scheme associated with a memory capacity for near memory 330, then benefits of having a larger memory capacity at near memory 370 may be reduced by using the memory addressing scheme associated with the lower memory capacity of near memory 330.

In some examples, near memory controllers 312 and 352 located with respective hierarchical memory controllers 310 and 350 may be arranged to control movement of data associated with execution of one or more applications by respective circuitry 320 and 360. For these examples, if the one or more applications are executed by circuitry 320 at device 305, near memory controller 312 may utilize near memory channel 332 to enable circuitry 320 to use near memory 330 as a cache while executing the one or more applications. Also, if the one or more applications are executed by circuitry 360 at device 355, near memory controller 352 may utilize near memory channel 372 to enable circuitry 320 to use near memory 370 as a cache while executing the one or more applications.

According to some examples, memory contents associated with executing one or more applications by circuitry 320 at device 305 may be migrated from near memory 330 to near memory 370 via interconnect 301. Circuitry 360 may then resume execution of the one or more applications at device 355. For these examples, logic and/or features at device 305 may configure near memory 330 as a midstream buffer following the migration of the memory contents. Configured as a midstream buffer, near memory controller 312 may enable periodic reception of dirty block data copied from near memory 370. The dirty block data may be associated with circuitry 360's execution of the one or more applications. As shown in FIG. 3, the dotted line shows an example movement of the dirty block data between the two near memories. The dirty block data, for example, may be sent over interconnect 301.

In some examples, dirty block data may be sent from near memory 370 based on a write-back policy that includes a threshold number of dirty blocks maintained in the second near memory or a threshold time via which dirty blocks may be maintained in the second near memory. For these examples, once either threshold is reached, near memory controller 352 may cause data in the dirty blocks to be copied and then sent to near memory 330 currently configured as a midstream buffer. The dirty blocks having copied data sent to near memory 330 may then be marked as "clean" blocks. Near memory controller 312 may then arrange for the received dirty blocks to be stored at near memory 330.

According to some examples, if near memory 330 reaches its capacity while configured as a midstream buffer, near memory controller 312 may implement an eviction policy to cause at least some previously received dirty block data to be copied or written to far memory 340. For these examples, far memory channel 316 may be used to send copied data to far memory controller 314 for storage at far memory 340. For these examples, blocks of memory at near memory 330 having copied data may be marked as "clean" blocks and may be among the first blocks that may be overwritten if near memory 330 is still at a full capacity when additional dirty block data is received.

In some examples, in addition to periodically receiving dirty block data to near memory 330, near memory controller 312 and far memory controller 314 of hierarchical memory controller 310 may be capable of receiving memory request(s) (see dashed-line in FIG. 3) from 2LM controller 350. For these examples, the memory request(s) may be based on a cache miss to near memory 370 during execution of one or more applications by circuitry 360. Responsive to receiving the memory request, a concurrent lookup of both near memory 330 and far memory 340 may be conducted. According to some examples, there may be a slight possibility that the needed data is located in near memory 330 and a high possibility that the needed data is located in far memory 340. However, even though the possibility is lower that the needed data is located in near memory 330, the access latencies may be substantially shorter. So if the needed data is located at near memory 330, the lookup in far memory 340 can be cancelled and data obtained from near memory 330 can then be sent to hierarchical memory controller 350 to fulfill the memory request(s).

According to some examples, near memory 330 may be arranged to operate as a midstream buffer according to a more aggressive power saving scheme. For these examples, periodic reception of data copied from dirty blocks at near memory 370 and memory requests may be routed through far memory 340 during a time device 305 is docked to device 355. Near memory 330 may be maintained in a low power self-refresh mode and is powered up when an indication that interconnect 301 is about to be terminated. As a result, near memory 330 may receive a copy of memory contents of near memory 370 (e.g., copied from dirty blocks) during the process of undocking from device 305. This aggressive power saving scheme may save energy but may also increase a transitional latency as near memory 330 has a smaller capacity than near memory 370 and may have to migrate at least some of the received memory contents to far memory 340 before the two devices can be undocked and/or execution of the one or more applications can be resumed by circuitry 320.

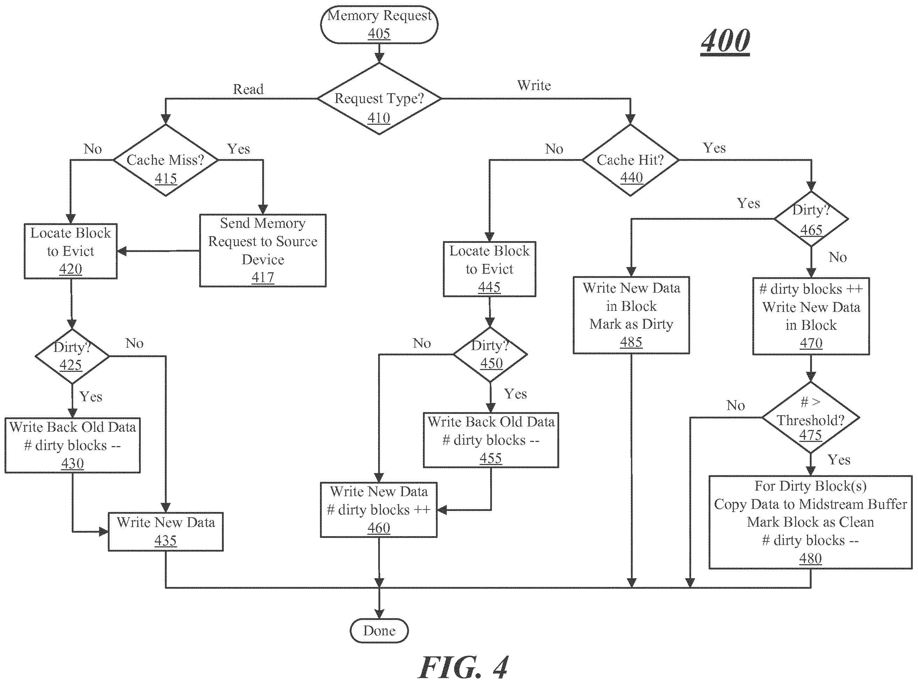

**FIG. 4** illustrates a first logic flow. In some examples, as shown in FIG. 4 the first logic flow includes logic flow 400. Logic flow 400 may be implemented by device 355 of system 300 as described above for FIG. 3 following a docking to device 305 and migration of a first computational state and memory contents for execution of one or more applications to circuitry 360 of device 355. Also, other components or elements of system 300 may be used to illustrate example processes related to logic flow 400. However, the example processes or operations are not limited to implementation using elements of system 300.

Starting from block 405 (Memory Request), circuitry 360 may generate a memory request in association with executing the one or more applications. In some examples, the memory request may be placed to near memory controller 352.

Moving from the block 405 to decision block 410 (Request Type?), logic and/or features at near memory controller 352 may determine whether the request is a write request or a read request. If the request is a read request, the process moves to decision block 415. If the request is a write request, the process moves to decision block 440.

Moving from decision block 410 to decision block 415 (Cache Miss?), logic and/or features at near memory controller 352 may determine whether data for the read request is located in near memory 370. If the data is located in near memory 370, the process moves to block 420. Otherwise, the process moves to block 417.

Moving from decision block 415 to block 417 (Send Memory Request to Source Device), logic and/or features at memory controller 352 may determine that data associated with the read request is not stored in near memory 352 and may be stored in either far memory 340 or near memory 330 at device 305 (source device). In some examples, memory controller 352 may cause a memory request to be sent to device 305 to obtain the data associated with the cache miss. For these examples, memory controllers 312/314 may search respective near/far memories 330/340 for the data included in the memory request and send the data over interconnect 301 to memory controller 352.

Moving from decision block 415 or block 417 to block 420 (Locate Block to Evict), logic and/or features at near memory controller 352 may locate a block of near memory 370 to evict to fulfill the read request.

Proceeding from block 420 to decision block 425 (Dirty?), logic and/or features at near memory controller 352 may determine whether the block of near memory 370 is dirty. If the block is dirty (e.g., data was modified since a last read request), the process moves to block 430. Otherwise the process moves to block 435.

Moving from decision block 425 to block 430 (Write Back Old Data - # dirty block --), logic and/or features at near memory controller may write back old data to the block of near memory 370 that was located for eviction. In some examples, a threshold number of dirty blocks (# dirty block) for near memory 370 may be maintained by the logic and/or features of near memory controller 352. The # dirty block may be based on a write-back policy and may represent a threshold number of dirty blocks maintained in near memory 370. For these examples, once the threshold number is reached or exceeded, the logic and/or features of near memory controller 352 may cause data stored in one or more dirty blocks to be copied and sent to near memory 330 over wired or wireless interconnect 301. The # dirty block may subtracted from or decremented (--) according to a number of dirty blocks for which the old data was written back since these blocks are no longer considered dirty.

According to some examples, the # dirty block may be set or determined based on static information. For these examples, the static information may indicate what amount of data copied from dirty blocks at near memory 370 can be quickly migrated to near memory 330 at undocking while maintaining a relatively low latency to resume execution of one or more applications on source device 305. The static information may include, but is not limited to, a memory capacity for near memory 330 or a given data bandwidth and a given latency to migrate a copy of memory contents in near memory 370 associated with execution of the one or more applications (e.g., dirty blocks) over interconnect 301. The static information may also include a power management scheme associated with near memory 330 or interconnect 301. For example, how often near memory 330 may be powered up to an operational power mode or powered down to a low power mode (e.g., self-refresh). Also, a communication interface to receive data over interconnect 301 may also be powered up/down according to a power management scheme that attempts to conserve power usage by device 305.

In some examples, the # dirty block may be determined based on dynamic information. For these examples, the dynamic information may indicate a variable amount of data that may need to be copied from dirty blocks at near memory 370 to allow for a quick migration to near memory 330 at undocking while maintaining a relatively low latency to resume execution of one or more applications on source device 305. The dynamic information may include, but is not limited to, a rate of which blocks of near memory 370 become dirty during execution of the one or more applications, available data bandwidth over interconnect 301 to send copied data included in dirty blocks or a measured latency (e.g., for near/far memory controllers 312/314) to copy data from near memory 330 to far memory 340. A dynamic power management scheme (e.g., based on available battery power) implemented by device 305 to power up/down near memory 330 or data transfer over interconnect 301 may also be included in dynamic information.

Proceeding from block 430 or moving from decision block 425 to block 435 (Write New Data), logic and/or features at memory controller 352 may write new data to the block of near memory 370 that was located for eviction. The process may then be done for a read memory request.

Moving from decision block 410 to decision block 440 (Cache Hit?), logic and/or features at near memory controller 352 may determine whether the write memory request was a cache miss. If the data is located in near memory 370 (cache hit), the process moves to block 445. Otherwise, the process moves to decision block 465.

Moving from decision block 440 to block 445 (Locate Block to Evict), logic and/or features at near memory controller 352 may locate a block of near memory 370 to evict to fulfill the write request.

Proceeding from block 445 to decision block 450 (Dirty?), logic and/or features at near memory controller 352 may determine whether the block of near memory 370 is dirty. If the block is dirty, the process moves to block 455. Otherwise the process moves to block 460.

Moving from decision block 450 to block 455 (Write Back Old Data # dirty block --), logic and/or features at near memory controller 352 may write back old data to the block of near memory 370 that was located for eviction and decrement # dirty block.

Moving from decision block 450 or block 455 to block 460 (Write New Data # dirty block ++), logic and/or features at near memory controller 352 may write new data to the block of near memory and then increment # dirty block. In some examples, # dirty block may incremented following the decrement at block 455 because a dirty block is replaced with another dirty block. Thus, the number of dirty blocks is unchanged. The process may then be done for a write memory request having no cache hit.

Moving from decision block 440 to decision block 465 (Dirty?), logic and/or features at near memory controller 352 may determine whether the block of near memory 370 for the cache hit is dirty. If the block is dirty, the process moves to block 485. Otherwise the process moves to block 470.

Moving from decision block 465 to block 470 (# dirty block ++ Write New Data in Block), logic and/or features at near memory controller 352 may write new data to the block of near memory and then increment # dirty block.

Proceeding from block 470 to decision block 475 (# > Threshold?), logic and/or features at near memory controller 352 may determine whether a number of current dirty blocks in near memory 370 exceeds the # dirty blocks threshold. If the number exceeds the # dirty blocks threshold, the process moves to block 480. Otherwise, the process may then be done for a write memory request having a cache hit.

Moving from decision block 475 to block 480 (For Dirty Block(s) Copy Data to Midstream Buffer Mark Block as Clean # dirty blocks --), logic and/or features at near memory controller 352 may cause data for one or more dirty blocks to be copied and sent to near memory 330 that is configured as a midstream buffer. In some examples, only a number of dirty blocks above the threshold may be copied and sent to near memory 330. In other examples, larger numbers of dirty blocks may be selected for copying of data and sending to near memory 330. In other examples, data for all dirty blocks at near memory 370 may be copied and then sent to near memory 330. The process may then be done for a write memory request having a cache hit.

Moving from decision block 465 to block 485 (Write New Data in Block Mark as Dirty), logic and/or features at near memory controller 352 may write new data to the block of near memory 370 that was determined as dirty and then mark that block as dirty. In some examples, the block is marked as dirty again to reflect that the block includes changed data due to the write memory request. Also, # dirty blocks remains unchanged for this example. The process may then be done for a write memory request having a cache hit to a dirty cache block of near memory 370.

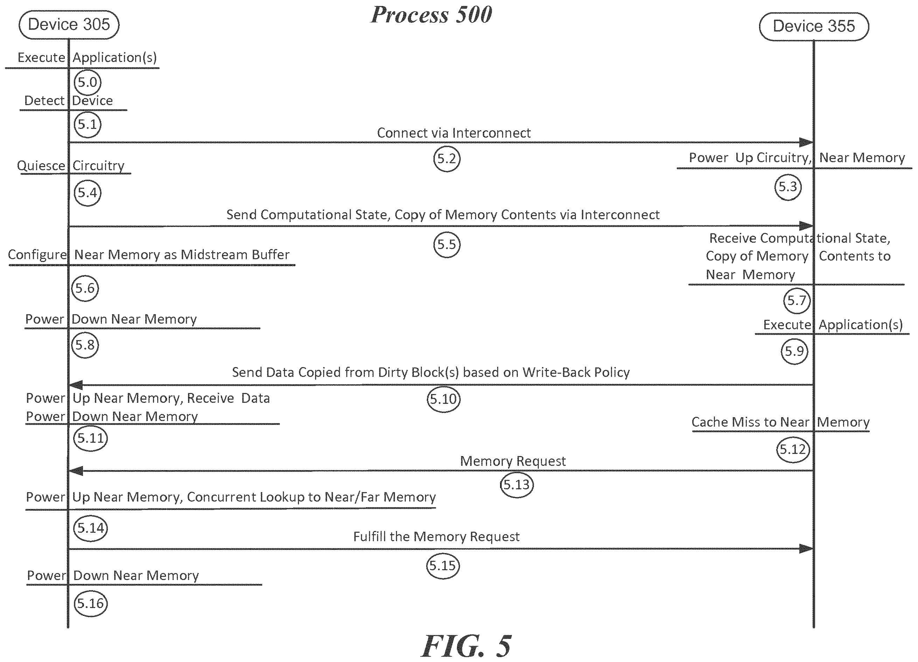

**FIG. 5** illustrates an example process 500. In some examples, process 500 may be for aggregating or composing memory resources between devices. For these examples, elements of system 300 as shown in FIG. 3 may be used to illustrate example operations related to process 500. However, the example processes or operations are not limited to implementations using elements of system 300.

Beginning at process 5.0 (Execute Application(s)), circuitry 320 of device 305 may be executing one or more applications. For example, the one or more applications may include a video streaming application to present streaming video to a display at device 305.

Proceeding to process 5.1 (Detect Device), logic and/or features at device 305 may detect device 355 having circuitry 360 capable of executing the one or more applications being executed by device 355.

Proceeding to process 5.2 (Connect via Interconnect), logic and/or features at device 305 may cause device 305 to connect to device 355 via an interconnect. In some examples, the connection for the interconnect may be via a wired communication channel. In other examples, the connection for the interconnect may be via a wireless communication channel.

Proceeding to process 5.3 (Power Up Circuitry, Near Memory), logic and/or features at device 333 may detect the connection to device 305 and may then cause circuitry 360 and near memory 370 to power up.

Proceeding to process 5.4 (Quiesce Circuitry), logic and/or features at device 305 may cause circuitry 320 to power down to a quiescent or low power state and capture a computational state associated with executing the one or more applications.

Proceeding to process 5.5 (Send Computational State, Copy of Memory Contents via Interconnect), logic and/or feature at device 305 may cause the captured computational state and a copy of memory contents of near memory 330 to be sent to device 355 via the wired/wireless interconnect. In some examples, the memory contents may include video frame information at least temporarily maintained in near memory 330 during the execution of the one or more applications by circuitry 320.

Proceeding to process 5.6 (Configure Near Memory as Midstream Buffer), logic and/or features at device 305 may configure near memory 330 to function as a midstream buffer capable of periodically receiving data copied from dirty blocks at near memory 370.

Proceeding to process 5.7 (Receive Computational State, Copy of Memory Contents to Near Memory), logic and/or features at device 355 may receive the computational state and copy of memory contents to near memory 370.

Proceeding to process 5.8 (Power Down Near Memory), logic and/or features at device 305, following the sending of the computational state and the copy of memory contents may cause near memory 330 to power down to a low power mode. For example, near memory 330 may be volatile memory such as DRAM or DDR SRAM and may power down to a self-refresh low power mode.

Proceeding to process 5.9 (Execute Application(s)), circuitry 360 may execute the one or more applications using the computational state and copy of memory contents received/stored to near memory 370. For example, video frame information for executing the video display application may be used to present streaming video to a display coupled to device 355. The streaming video may be high definition video (e.g., at least 4K resolution) presented to a large size display (e.g., greater than 15 inches).

Proceeding to process 5.10 (Send Data Copied from Dirty Block(s) based on Write-Back Policy), logic and/or features at device 355 may implement a write-back policy associated with data to be copied from one or more dirty blocks generated during execution of the one or more applications by circuitry 360. The copied data may then be sent to device 305 over interconnect 301. In some examples, the write-back policy may include a threshold number (e.g., # dirty blocks) of dirty blocks maintained in the near memory 370. The write-back policy may also include a threshold time via which dirty blocks may be maintained in the near memory 370. For example, the logic and/or features at device 355 may cause data in one or more dirty blocks of near memory 370 to be copied and sent to device 305 at either static/fixed time intervals (e.g., based on static information) or dynamic/variable time intervals (e.g., based on dynamic information).

Proceeding to process 5.11 (Power Up Near Memory, Receive Data, Power Down Near Memory), logic and/or features at device 305, responsive to receiving the data copied from the one or more dirty blocks, may power up near memory 330 to an operational power state, may cause the data to be received at near memory 330 and then cause near memory 330 to be powered down.

Proceeding to process 5.12 (Cache Miss to Near Memory), circuitry 360 during the execution of the one or more applications may place a read request for data that is not included in the memory contents migrated to near memory 370. In some examples, the lack of the data in near memory 370 may result in a cache miss in a similar manner as mentioned above for FIG. 4. For these examples, the data may be maintained in near memory 330 or far memory 340.

Proceeding to process 5.13 (Memory Request to Far Memory), logic and/or features at device 355 may generate and send a memory request to device 305 to obtain the data associated with the cache miss.

Proceeding to process 5.14 (Power Up Near Memory, Concurrent Lookup to Near/Far Memory), logic and/or features at device 305 may power up near memory 330 and then perform a concurrent lookup to both near memory 330 and far memory 340 to access or locate the data associated with the cache miss.

Proceeding to process 5.15 (Fulfill the Memory Request), logic and/or features at device may fulfill the memory request based on whether the data is located in near memory 330 or far memory 340. In some examples, if the lookup determines the data is in near memory 330, the lookup to far memory 340 may be canceled. The data may then be copied form near memory and sent to device 355 over interconnect 301 to fulfill the memory request.

Proceeding to process 5.16 (Power Down Near Memory), logic and/or features at device 305 may power down near memory 330.

In some examples, at least processes 5.9 to 5.16 of process 500 may continue until a disconnection/termination of the interconnect connecting device 355 to device 305. As mentioned more below, in some example, another series of processes may be implemented by logic and/or features at devices 305 and 355 to allow a second computational state and second copy of memory contents associated with circuitry 360's execution of the one or more applications to be migrated to near memory 330. The migration may occur prior to the termination of the interconnect.

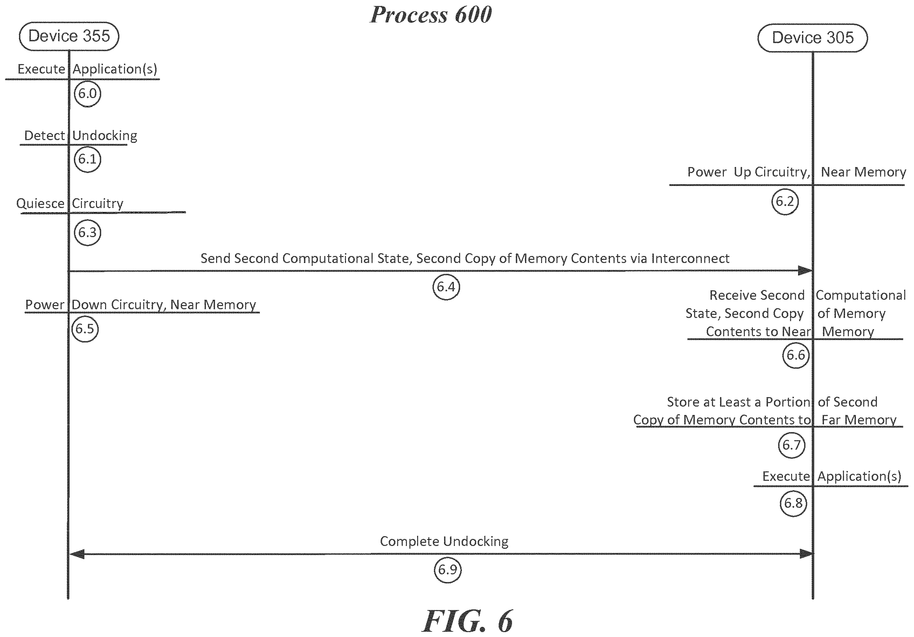

**FIG. 6** illustrates an example process 600. In some examples, process 600 may be for undocking or disconnecting an aggregated or composed memory resource between devices. For these examples, elements of system 300 as shown in FIG. 3 may be used to illustrate example operations related to process 600. Also, process 600 may be a continuation of process 500 following the aggregation or composing of memory resources as described above for FIG. 5. However, the example processes or operations are not limited to implementations using elements of system 300 or to a continuation of process 500.

Beginning at process 6.0 (Execute Application(s)), circuitry 360 of device 355 may be executing one or more applications that were previously executed by circuitry 320 of device 305 prior to docking as mentioned above for process 500.

Proceeding to process 6.1 (Detect Undocking), logic and/or features at device 355 may detect or receive an indication that the connection to device 305 is to be terminated. In some examples, if the connection is via a wired interconnect, the detection may be based on a user causing the indication by inputting an indication and/or physically removing device from a dock or unplugging a connector (e.g., a dongle) for the wired interconnect. In other examples, if the connection is via a wireless interconnect, the detection may be based on the user initiating movement of device 305 in a direction away from device 355 in a manner that indicates the wireless interconnect is soon to be disconnected or fall out of an acceptable range to maintain the wireless interconnect.

Proceeding to process 6.2 (Power Up Circuitry, Near Memory), logic and/or features at device 305 may power up circuitry 320 and near memory 330 in anticipation of the undocking. In some examples, as mentioned above for process 500, a write-back policy that may have caused data copied from dirty blocks in near memory 370 to be periodically sent to device 305 during the execution of the one or more applications by circuitry 360 and stored to near memory 330 and/or far memory 340.

Proceeding to process 6.3 (Quiesce Circuitry), logic and/or features at device 355 may cause circuitry 360 to power down to a quiescent or low power state and capture a second computational state associated with circuitry 360's execution of the one or more applications. In the some examples, the first computational state may be associated with circuitry 320's previous execution of the one or more applications at device 305.

Proceeding to process 6.4 (Send Second Computational State, Second Copy of Memory Contents via Interconnect), logic and/or feature at device 355 may cause the second computational state and a second copy of memory contents to be sent to device 305 via the interconnect.. In the some examples, the first copy of memory contents may be associated with circuitry 320's previous execution of the one or more applications at device 305.

Proceeding to process 6.5 (Power Down Circuitry, Near Memory), logic and/or features at device 355 may then power down both circuitry 360 and near memory 370.

Proceeding to process 6.6 (Receive Second Computational State, Second Copy of Memory Contents to Near Memory), logic and/or features at device 305 may receive the second computational state and the second copy of memory contents to near memory 340.

Proceeding to process 6.7 (Store at Least a Portion of Second Copy of Memory Contents to Far Memory), logic and/or features at device 305 may store at least a portion of the second copy of memory contents received at near memory 330 from near memory 370 to far memory 340. In some examples, the at least a portion of the second copy of memory contents may be similar to an overflow of data due to a capacity difference between near memory 330 and near memory 370.

Proceeding to process 6.8 (Execute Application(s)), circuitry 320 at device 305 may use the second computational state and the portions of the second copy of memory contents now stored in near memory 330 to resume execution of the one or more applications.

Proceeding to process 6.9 (Complete Undocking), logic and/or features at both device 305 and 355 may complete the undocking by terminating the connection via the interconnect and process 600 then comes to an end.

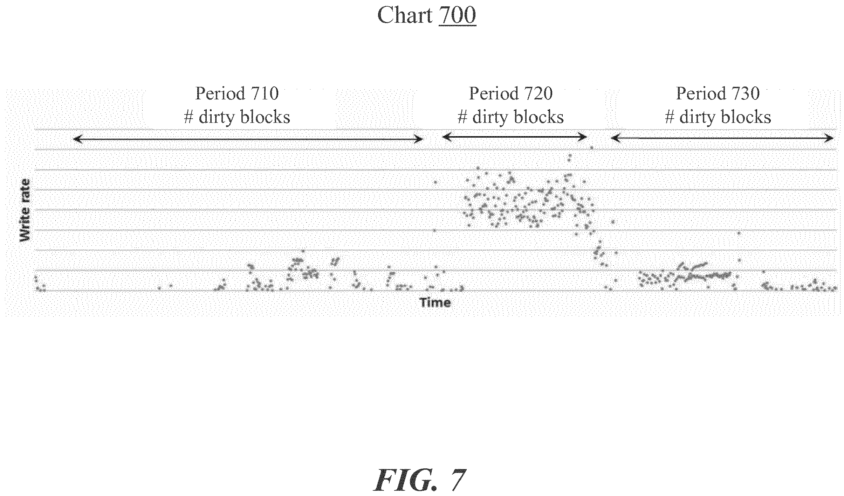

**FIG. 7** illustrates an example chart 700 for determining a threshold. In some examples, as shown in FIG. 7, chart 700 shows time periods 710, 720 and 730. For these examples, time periods 710, 720 or 730 may relate to application phases with high or low rates of write transactions when executed by circuitry and corresponding low and high # dirty block thresholds associated with implementing a write back policy based on dynamic information as described above for FIG. 4. For example, period 720 may indicate an application phase having a high rate or writes. For period 720 it may be likely that the application may be updating (rewriting) a same set of blocks. Dynamically increasing the # dirty blocks threshold during period 720 may prevent excessive sending of data copied from dirty blocks to a source device over an interconnect. Conversely, periods 710 and 730 may have low rates of writes and may indicate a read-dominated application phase in which data copied from dirty blocks may occur less often. Dynamically decreasing the # dirty blocks threshold at periods 710 and 730 may avoid long periods of time between the sending of data copied from dirty blocks. Examples are not limited to dynamic adjustments to a threshold number of dirty blocks based on write rates.

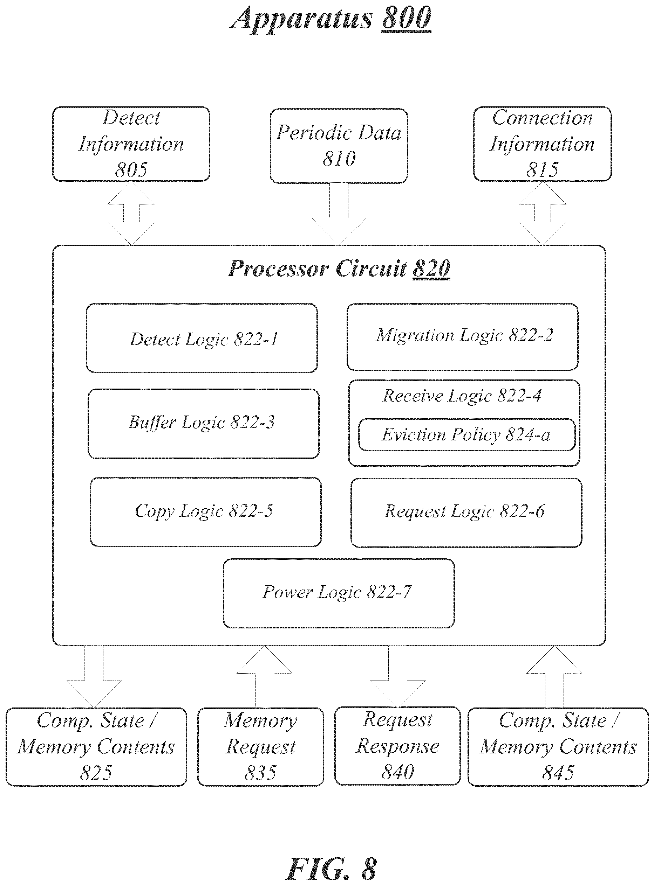

**FIG. 8** illustrates a block diagram for a first apparatus. As shown in FIG. 8, the first apparatus includes an apparatus 800. Although apparatus 800 shown in FIG. 8 has a limited number of elements in a certain topology or configuration, it may be appreciated that apparatus 800 may include more or less elements in alternate configurations as desired for a given implementation.

The apparatus 800 may include a component of a computing device that may be firmware implemented and have a processor circuit 820 arranged to execute one or more logics 822-*a.* It is worthy to note that "*a*" and *"b"* and "*c*" and similar designators as used herein are intended to be variables representing any positive integer. Thus, for example, if an implementation sets a value for *a* = 7, then a complete set of logics 822-*a* may include logics 822-1, 822-2, 822-3, 822-4, 822-5, 822-6 or 822-7. The examples are not limited in this context.

According to some examples, apparatus 800 may be part a first device having first circuitry capable of executing one or more applications (e.g. device 105, 205 or 305) using a 2LM architecture including a first near memory and a second far memory. The examples are not limited in this context.

In some examples, as shown in FIG. 8, apparatus 800 includes processor circuit 820. Processor circuit 820 may be generally arranged to execute one or more logics 822*-a.* Processor circuit 820 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Qualcomm® Snapdragon®; Intel® Celeron®, Core (2) Duo®, Core i3, Core i5, Core i7, Itanium®, Pentium®, Xeon®, Atom® and XScale® processors; and similar processors. Dual microprocessors, multi-core processors, and other multi-processor architectures may also be employed as processor circuit 820. According to some examples processor circuit 820 may also be an application specific integrated circuit (ASIC) and logics 822-a may be implemented as hardware elements of the ASIC.

According to some examples, apparatus 800 may include a detect logic 822-1. Detect logic 822-1 may be executed by processor circuit 820 to detect second circuitry at a second device that is capable of executing one or more applications using the 2LM architecture that also includes a second near memory maintained at the second device. For example, detect logic 822-1 may receive detect information 805 that may indicate that a second device having the second circuitry and second near memory has connected to the first device via either a wired or wireless communication channel.

In some examples, apparatus 800 may also include a migration logic 822-2. Migration logic 822-2 may be executed by processor circuit 820 to cause a copy of memory contents and a computational state associated with the first circuitry's execution of the one or more applications to be migrated over a wired or wireless interconnect from the first near memory to the second near memory for the second circuitry to execute the one or more applications. For these examples, computational state / memory contents 825 may include the copy of memory contents and the computational state.

According to some examples, apparatus 800 may also include a buffer logic 822-3. Buffer logic 822-3 may be executed by processor circuit 820 to configure the first near memory to function as a buffer capable of periodically receiving data copied from dirty blocks at the second near memory.

In some examples, apparatus 800 may also include a receive logic 822-4. Receive logic 822-4 may be executed by processor circuitry to periodically receive the data from the second near memory over the wired or wireless interconnect, store the data to a first set of one or more blocks at the first near memory and mark the first set as dirty blocks. For these examples, the periodically received data may be included in periodic data 810. Also, for these examples, receive logic 822-4 may be capable of maintaining eviction policy 824-a. Eviction policy 824-a may be a data structure such as a lookup table that is used by receive logic 822-4 to determine which blocks to evict from the first near memory if all "clean blocks" have been evicted and a capacity threshold for the first near memory is exceeded upon receiving data copied from dirty blocks at the second near memory. For example, the eviction policy may include a first-in-first-out (FIFO) eviction policy or other types of eviction schemes to free up capacity at the first near memory.

According to some examples, apparatus 800 may also include a copy logic 822-5. Copy logic 822-5 may be executed by processor circuitry to copy data stored to the first set of the one or more blocks to the first far memory and mark the first set of one or more blocks as clean following copying to the first far memory.

According to some examples, apparatus 800 may also include a request logic 822-6. Request logic 822-6 may be executed by processor circuitry to receive a memory request from the first device based on a cache miss to the second near memory. For these examples, request logic 822-6 may cause a concurrent lookup of both the first near memory and the first far memory to locate data associated with the memory request. Request logic 822-6 may also determine whether the data is located at the near memory and may cancel the lookup to the first far memory if the data is located at the near memory. Request logic 822-6 may also send the data over the wired or wireless link to fulfill the memory request. For these examples, the memory request may be included in memory request 835 to be fulfilled by providing data associated with the cache miss in request response 840.

According to some examples, apparatus 800 may include a power logic 822-7. Power logic 822-7 may be executed by processor circuit 820 to either cause the first circuitry and the first near memory to be powered down or powered up. For example, the first circuitry and the first near memory may be powered down to a lower power state following the sending of the computational state and the copy of memory contents 825 to the second device. The first circuitry and the first near memory may subsequently be powered up to a higher power state following an indication that the interconnect between the first and second devices is about to be terminated. The indication may be included in connection information 815 (e.g., user input command or wireless range detection).

Included herein is a set of logic flows representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware embodiments, a logic flow may be implemented by computer executable instructions stored on at least one non-transitory computer readable medium or machine readable medium, such as an optical, magnetic or semiconductor storage. The embodiments are not limited in this context.

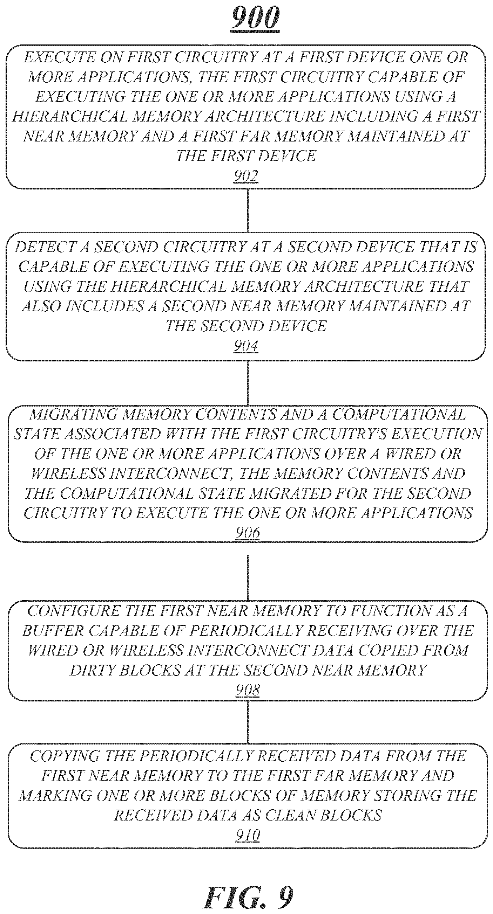

**FIG. 9** illustrates an example of a first logic flow. As shown in FIG. 9, the first logic flow includes a logic flow 900. Logic flow 900 may be representative of some or all of the operations executed by one or more logic, features, or devices described herein, such as apparatus 900. More particularly, logic flow 900 may be implemented by detect logic 822-1, migration logic 822-2, buffer logic 822-3, receive logic 822-4, copy logic 822-5, request logic 822-6 or power logic 822-7.

In the illustrated example shown in FIG. 9, logic flow 900 at block 902 may execute on first circuitry at a first device one or more applications. The first circuitry may be capable of executing the one or more applications using a 2LM architecture including a first near memory and a first far memory maintained at the first device.

According to some examples, logic flow 900 at block 904 may detect a second device having second circuitry capable of executing the one or more applications using the 2LM architecture that also includes a second near memory maintained at the second device. For these examples, detect logic 822-1 may detect the second circuitry.

In some examples, logic flow 900 at block 906 may migrate memory contents and a computational state associated with the first circuitry's execution of the one or more applications over a wired or wireless interconnect. The memory contents and the computational state may be migrated for the second circuitry to execute the one or more applications. For these examples, migration logic 822-2 may cause the memory contents and the computational state to be migrated over the wired or wireless interconnect.

According to some examples, logic flow 900 at block 908 may configure the first near memory to function as a buffer capable of periodically receiving, over the wired or wireless interconnect, data copied from dirty blocks at the second near memory. For these examples, buffer logic 822-3 may configure the first near memory to function as a midstream buffer.

In some examples, logic flow 900 at block 910 may copy the periodically received data from the first near memory to the first far memory and mark one or more blocks of memory storing the received data as clean blocks. For these examples, copy logic 822-5 may copy the periodically received data.

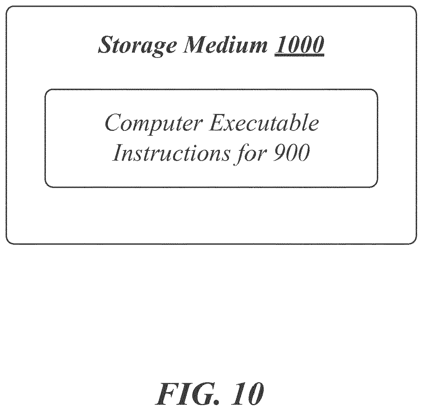

**FIG. 10** illustrates an embodiment of a first storage medium. As shown in FIG. 10, the first storage medium includes a storage medium 1000. Storage medium 1000 may comprise an article of manufacture. In some examples, storage medium 1000 may include any non-transitory computer readable medium or machine readable medium, such as an optical, magnetic or semiconductor storage. Storage medium 1000 may store various types of computer executable instructions, such as instructions to implement logic flow 900. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

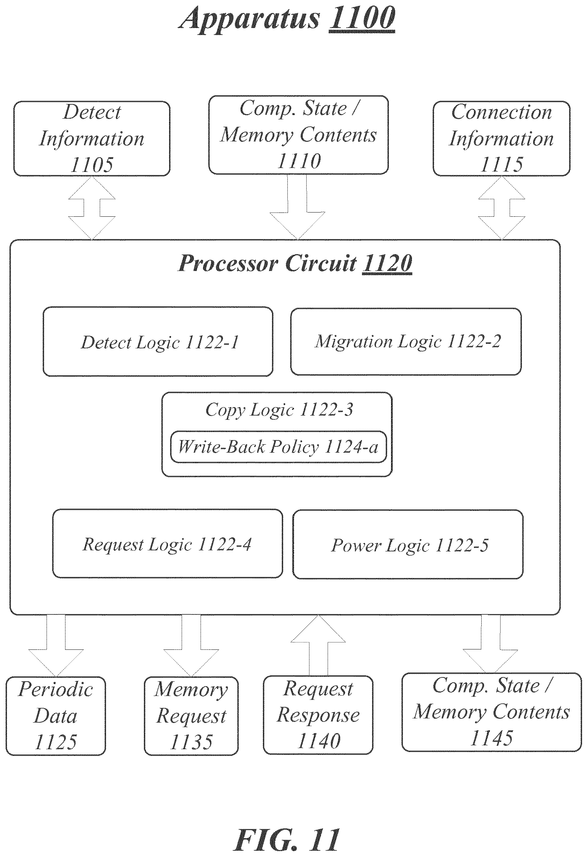

**FIG. 11** illustrates a block diagram for a second apparatus. As shown in FIG. 11, the second apparatus includes an apparatus 1100. Although apparatus 1100 shown in FIG. 11 has a limited number of elements in a certain topology or configuration, it may be appreciated that apparatus 1100 may include more or less elements in alternate configurations as desired for a given implementation.

The apparatus 1100 may include a component of a computing device that may be firmware implemented and have a processor circuit 1120 arranged to execute one or more logics 1122-*a*. Similar to apparatus 800 for FIG. 8, "*a*" and "*b*" and "*c*" and similar designators may be variables representing any positive integer.

According to some examples, apparatus 1100 may be part a first device (e.g. device 155, 255 or 355) having first circuitry capable of executing one or more applications using a 2LM architecture including a first near memory maintained at the first device and a first far memory. The examples are not limited in this context.

In some examples, as shown in FIG. 11, apparatus 1100 includes processor circuit 1120. Processor circuit 1120 may be generally arranged to execute one or more logics 1122-*a*. Processor circuit 1120 can be any of various commercially available processors to include, but not limited to, those previously mentioned for processor circuit 820 for apparatus 800. Dual microprocessors, multi-core processors, and other multi-processor architectures may also be employed as processor circuit 1120. According to some examples processor circuit 1120 may also be an application specific integrated circuit (ASIC) and logics 1122-a may be implemented as hardware elements of the ASIC.

According to some examples, apparatus 1100 may include a detect logic 1122-1. Detect logic 1122-1 may be executed by processor circuit 1120 to detect an indication that a second device having second circuitry has connected to the first device via a wired or wireless interconnect. The second circuitry may be capable of executing the one or more applications using the 2LM architecture that also includes a second near memory maintained at the second device and the first far memory maintained at the second device. For these examples, detect logic 1122-1 may receive detect information 1105 that may indicate the connection to the second circuitry via either a wired or wireless communication channel.

In some examples, apparatus 1100 may also include a migration logic 1122-2. Migration logic 1122-2 may be executed by processor circuit 1120 to receive a copy of memory contents and a computational state associated with the second circuitry's execution of the one or more applications. The copy of memory contents and the computational state may have been migrated from the second near memory over the wired or wireless interconnect. Migration logic 1122-2 may then cause the copy to be stored in the first near memory for the first circuitry to execute the one or more applications. For these examples, copy of memory contents and the computational state may be received via computational state / memory contents 1110.

According to some examples, apparatus 1100 may also include a copy logic 1122-3. Copy logic 1122-3 may be executed by processor circuit 1120 to cause data copied from dirty blocks at the first near memory to be sent to the second near memory over the wired or wireless interconnect. For these examples, the data copied may be included in periodic data 1125. Also, in some examples, copy logic 1122-3 may maintain write-back policy 1124-a (e.g., in a lookup table). For these example, write-back policy 1124-a may be based on a threshold number of dirty blocks maintained in the second near memory or a threshold time via which dirty blocks may be maintained in the second near memory.

In some examples, apparatus 1100 may also include a request logic 1122-4. Request logic 1122-4 may be executed by processor circuit 1120 to receive a cache miss indication for the first near memory during execution of the one or more applications at the first circuitry. Responsive to the cache miss indication, request logic 1122-4 may send a memory request included in memory request 1135 to the second device to obtain data associated with the cache miss that may be maintained in one of the first far memory or the second near memory. Data associated with memory request 1135 may then be received from the second device in request response 1140. Request logic 1122-4 may then cause the received data to be stored in the first near memory.

According to some examples, detection logic 1122-1 may receive an indication via connection information 1115 that the wired or wireless interconnect to the second device is to be terminated. For these examples, migration logic 1122-2 may be capable of sending a second computation state and a second copy of memory contents from the first near memory to the second near memory responsive to the detection by detection by logic 1122-1. The second computation state and a second copy of memory contents may be included in computational state / memory contents 1145.

In some examples, apparatus 1100 may include a power logic 1122-6. Power logic 1122-6 may be executed by processor circuit 1120 to either power down or power up the first circuitry and the first near memory at the first device. For example, the first circuitry and the first near memory may be powered down to a lower power state following the sending of the second computation state and the second copy of memory contents included in computational state / memory contents 1145.

Included herein is a set of logic flows representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware embodiments, a logic flow may be implemented by computer executable instructions stored on at least one non-transitory computer readable medium or machine readable medium, such as an optical, magnetic or semiconductor storage. The embodiments are not limited in this context.

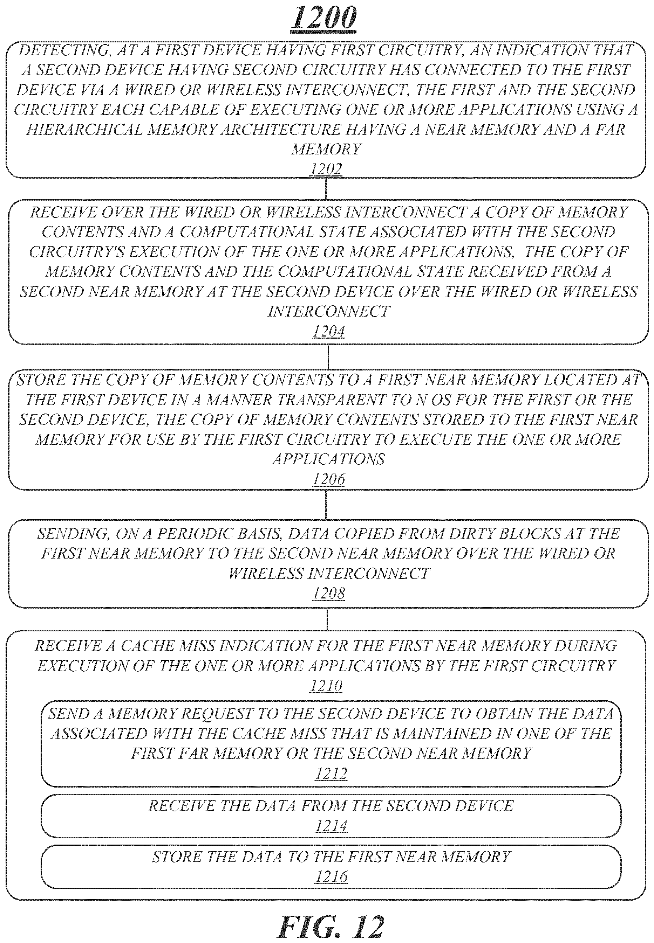

**FIG. 12** illustrates an example of a second logic flow. As shown in FIG. 12, the second logic flow includes a logic flow 1200. Logic flow 1200 may be representative of some or all of the operations executed by one or more logic, features, or devices described herein, such as apparatus 1200. More particularly, logic flow 1200 may be implemented by detect logic 1122-1, migration logic 1122-2, copy logic 1122-3, request logic 1122-4 or power logic 1122-5.

In the illustrated example shown in FIG. 12, logic flow 1200 at block 1202 may detect, at a first device having first circuitry, an indication that a second device having second circuitry has connected to the first device via a wired or wireless interconnect. The first and the second circuitry may each be capable of executing one or more applications using a 2LM architecture having a near memory and a far memory. For example, detect logic 1122-1 may detect the second device.

In some examples, logic flow 1200 at block 1204 may receive over the wired or wireless interconnect a copy of memory contents and a computational state associated with the second circuitry's execution of the one or more applications. The copy of memory contents and the computational state may be received from a second near memory at the second device over the wired or wireless interconnect. For these examples, migration logic 1122-2 may receive the copy of memory contents.

According to some examples, logic flow 1200 at block 1206 may store the copy of memory contents and the computational state to a first near memory at the first device for the first circuitry to execute the one or more applications. For these examples, copy logic 1122-3 may cause the copy of memory contents and the computational state to be stored to the first near memory.

In some examples, logic flow 1200 at block 1208 may send, on a periodic basis, data copied from dirty blocks at the first near memory to the second near memory over the wired or wireless interconnect. For these examples, copy logic 1122-3 may cause the at least portions of memory contents to be sent to the first near memory or the second near memory.

In some examples, logic flow 1200 at block 1210 may a cache miss indication for the first near memory during execution of the one or more applications by the first circuitry. The logic flow at block 1212 may then send a memory request to the second device to obtain data associated with the cache miss that is maintained in one of the first far memory or the second near memory. The logic flow at block 1214 may then receive the data from the second device and the logic flow at block 1216 may store the data to the first near memory. For these examples, request logic 1122-3 may be capable of implementing blocks 1210 to 1216 of logic flow 1200.

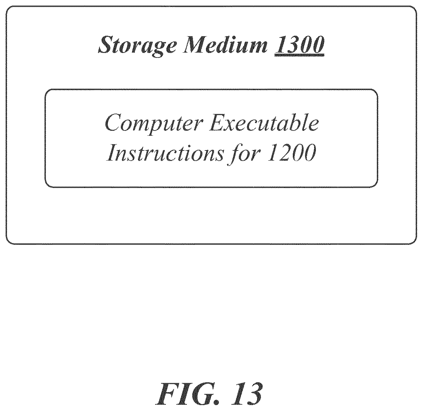

**FIG. 13** illustrates an embodiment of a second storage medium. As shown in FIG. 13, the second storage medium includes a storage medium 1300. Storage medium 1300 may comprise an article of manufacture. In some examples, storage medium 1300 may include any non-transitory computer readable medium or machine readable medium, such as an optical, magnetic or semiconductor storage. Storage medium 1300 may store various types of computer executable instructions, such as instructions to implement logic flow 1200. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

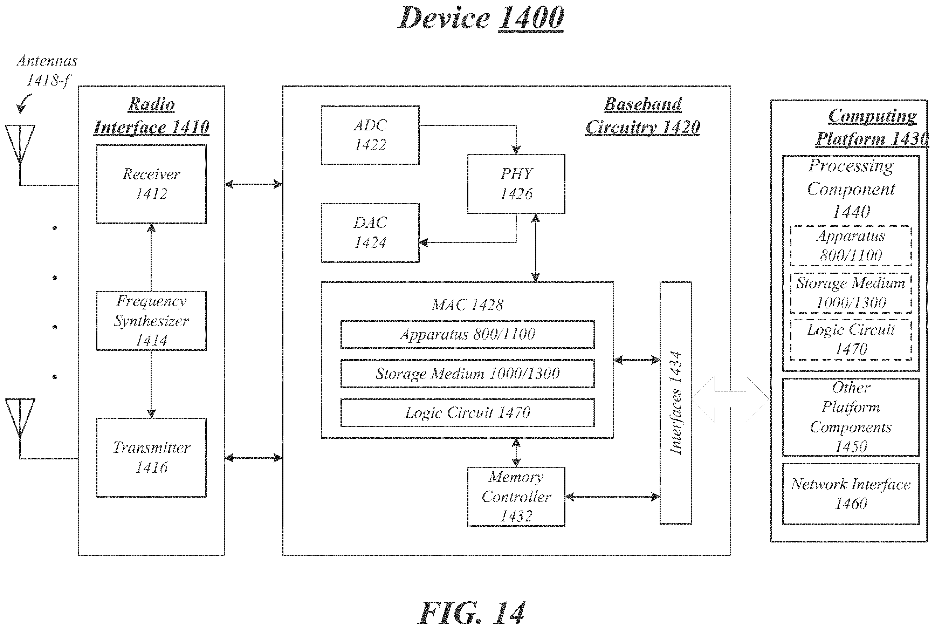

**FIG. 14** illustrates an embodiment of a device 1400. In some examples, device 1400 may be configured or arranged for aggregating compute, memory and input/output (I/O) resources with another device. Device 1400 may implement, for example, apparatus 800/1100, storage medium 1000/1300 and/or a logic circuit 1470. The logic circuit 1470 may include physical circuits to perform operations described for apparatus 800/1100. As shown in FIG. 14, device 1400 may include a radio interface 1410, baseband circuitry 1420, and computing platform 1430, although examples are not limited to this configuration.

The device 1400 may implement some or all of the structure and/or operations for apparatus 800/1100, storage medium 1000/1300 and/or logic circuit 1470 in a single computing entity, such as entirely within a single device. The embodiments are not limited in this context.

Radio interface 1410 may include a component or combination of components adapted for transmitting and/or receiving single carrier or multi-carrier modulated signals (e.g., including complementary code keying (CCK) and/or orthogonal frequency division multiplexing (OFDM) symbols and/or single carrier frequency division multiplexing (SC-FDM symbols) although the embodiments are not limited to any specific over-the-air interface or modulation scheme. Radio interface 1410 may include, for example, a receiver 1412, a transmitter 1416 and/or a frequency synthesizer 1414. Radio interface 1410 may include bias controls, a crystal oscillator and/or one or more antennas 1418-*f*. In another embodiment, radio interface 1410 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 1420 may communicate with radio interface 1410 to process receive and/or transmit signals and may include, for example, an analog-to-digital converter 1422 for down converting received signals, a digital-to-analog converter 1424 for up converting signals for transmission. Further, baseband circuitry 1420 may include a baseband or physical layer (PHY) processing circuit 1426 for PHY link layer processing of respective receive/transmit signals. Baseband circuitry 1420 may include, for example, a processing circuit 1428 for medium access control (MAC)/data link layer processing. Baseband circuitry 1420 may include a memory controller 1432 for communicating with MAC processing circuit 1428 and/or a computing platform 1430, for example, via one or more interfaces 1434.

In some embodiments, PHY processing circuit 1426 may include a frame construction and/or detection logic, in combination with additional circuitry such as a buffer memory, to construct and/or deconstruct communication frames (e.g., containing subframes). Alternatively or in addition, MAC processing circuit 1428 may share processing for certain of these functions or perform these processes independent of PHY processing circuit 1426. In some embodiments, MAC and PHY processing may be integrated into a single circuit.

Computing platform 1430 may provide computing functionality for device 1400. As shown, computing platform 1430 may include a processing component 1440. In addition to, or alternatively of, baseband circuitry 1420 of device 1400 may execute processing operations or logic for apparatus 800/1100, storage medium 1000/1300, and logic circuit 1470 using the processing component 1430. Processing component 1440 (and/or PHY 1426 and/or MAC 1428) may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

Computing platform 1430 may further include other platform components 1450. Other platform components 1450 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Computing platform 1430 may further include a network interface 1460. In some examples, network interface 1460 may include logic and/or features to support network interfaces operated in compliance with one or more wireless or wired technologies such as those described above for connecting to another device via a wired or wireless communication channel to establish an interconnect between the devices.

Device 1400 may be, for example, user equipment, a computer, a personal computer (PC), a desktop computer, a laptop computer, a notebook computer, a netbook computer, a tablet computer, an ultra-book computer, a smart phone, a wearable computing device, embedded electronics, a gaming console, a server, a server array or server farm, a web server, a network server, an Internet server, a work station, a mini-computer, a main frame computer, a supercomputer, a network appliance, a web appliance, a distributed computing system, multiprocessor systems, processor-based systems, or combination thereof. Accordingly, functions and/or specific configurations of device 1400 described herein, may be included or omitted in various embodiments of device 1400, as suitably desired.

Embodiments of device 1400 may be implemented using single input single output (SISO) architectures. However, certain implementations may include multiple antennas (e.g., antennas 1418-*f*) for transmission and/or reception using adaptive antenna techniques for beamforming or spatial division multiple access (SDMA) and/or using multiple input multiple output (MIMO) communication techniques.

The components and features of device 1400 may be implemented using any combination of discrete circuitry, application specific integrated circuits (ASICs), logic gates and/or single chip architectures. Further, the features of device 1400 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 1400 shown in the block diagram of FIG. 14 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled", "connected", or "capable of being coupled" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

## Claims

1. An apparatus (800) comprising:
first circuitry (220) at a first device (205) capable of executing one or more applications using a hierarchical memory architecture including a first near memory (240) and a first far memory (245) maintained at the first device, the first near memory (240) having a lower latency than the first far memory (245);
a detect logic (882-1) to detect second circuitry at a second device (255) that is capable of executing the one or more applications using the hierarchical memory architecture that also includes a second near memory maintained at the second device, the second near memory having a lower latency than the first far memory (245);
a migration logic (822-2) to cause a copy of memory contents and a computational state associated with the first circuitry's execution of the one or more applications to be migrated over a wired or wireless interconnect from the first near memory to the second near memory for the second circuitry to execute the one or more applications; and
a buffer logic (822-3) to configure the first near memory to function as a buffer capable of periodically receiving data copied from dirty blocks at the second near memory.

2. The apparatus of claim 1, comprising:
a receive logic (822-4) to periodically receive the data from the second near memory over the wired or wireless interconnect, store the data to a first set of one or more blocks at the first near memory and mark the first set as dirty blocks; and
a copy logic (822-5) to copy data stored to the first set to the first far memory and mark the first set of one or more blocks as clean following copying to the first far memory.

3. The apparatus of claim 2, the receive logic to receive data copied from dirty blocks at the second near memory comprises the receive logic to first evict blocks of memory from the first near memory marked as clean blocks responsive to the first near memory reaching a capacity threshold and evict blocks of memory marked as dirty from the first near memory according to a dirty block eviction policy if all clean blocks have been evicted and the capacity threshold is still being reached upon receipt of the data copied from the dirty blocks at the second near memory.

4. The apparatus of claim 2, comprising:
the first near memory including volatile memory and the first far memory including non-volatile memory; and
a power logic (822-7) to power down the first near memory to a lower power state that includes a self-refresh power mode following copying of the received data to the first far memory by the copy logic.

5. The apparatus of claim 4, comprising:
the detect logic to receive an indication that the wired or wireless interconnect to the second circuitry is to be terminated;
the power logic to power up the first circuitry and the first near memory to a higher power state;
the receive logic to receive, at the first near memory, a migrated second copy of memory contents and a second computational state associated with the second circuitry's execution of the one or more applications, the second copy of memory contents and the second computational state sent from the second near memory over the wired or wireless interconnect;
the copy logic to store at least a portion of the second copy of memory contents from the second near memory to the first far memory; and
the first circuitry to resume execution of the one or more applications at the first device based on the received second copy of memory contents and the second computational state.

6. The apparatus of claim 1, comprising:
a request logic (822-6) to receive a memory request from the second device based on a cache miss to the second near memory, the request logic to:
cause a concurrent lookup of both the first near memory and the first far memory to locate data associated with the memory request;
determine whether the data is located at the first near memory;
cancel the lookup to the first far memory if the data is located at the first near memory; and
send the data over the wired or wireless interconnect to fulfill the memory request.

7. The apparatus of claim 1, the hierarchical memory architecture comprising a two-level memory '2LM' architecture.

8. The apparatus of claim 1, the first device comprising one or more of the first device having a lower thermal capacity for dissipating heat from the first circuitry compared to a higher thermal capacity for dissipating heat from the second circuitry at the second device, the first device operating on battery power or the first device having a lower current-carrying capacity for powering the first circuitry compared to a higher current-carrying capacity for powering the second circuitry at the second device.

9. The apparatus of claim 1, the one or more applications comprises one of at least a 4K resolution streaming video application, an application to present at least a 4K resolution image or graphic to a display, a gaming application including video or graphics having at least a 4K resolution when presented to a display, a video editing application or a touch screen application for user input to a display coupled to the second circuitry having touch input capabilities.

10. A method (900) comprising:
executing (902) on first circuitry at a first device one or more applications, the first circuitry capable of executing the one or more applications using a hierarchical memory architecture including a first near memory and a first far memory maintained at the first device, the first near memory having a lower latency than the first far memory;
detecting (904) a second device having second circuitry capable of executing the one or more applications using the hierarchical memory architecture that also includes a second near memory maintained at the second device, the second near memory having a lower latency than the first far memory;
migrating (906) a copy of memory contents and a computational state associated with the first circuitry's execution of the one or more applications over a wired or wireless interconnect, from the first near memory to the second near memory the memory contents and the computational state migrated for the second circuitry to execute the one or more applications; and
configuring (908) the first near memory to function as a buffer capable of periodically receiving, over the wired or wireless interconnect, data copied from dirty blocks at the second near memory.

11. The method of claim 10, comprising:
copying (910) the periodically received data from the first near memory to the first far memory and marking one or more blocks of memory storing the received data as clean blocks.

12. The method of claim 10, comprising:
the first near memory including volatile memory and the first far memory including non-volatile memory;
powering down the first near memory to a lower power state that includes a self-refresh power mode following copying of the received data to the first far memory;
receiving an indication that the wired or wireless interconnect to the second circuitry is to be terminated;
powering up the first circuitry and the first near memory to a higher power state;
receiving, at the first near memory, a migrated second copy of memory contents and second computational state associated with the second circuitry's execution of the one or more applications, the second copy of memory contents and the second computational state received from the second near memory over the wired or wireless interconnect;
storing at least a portion of the second copy of memory contents from the second near memory to the first far memory; and
resuming execution of the one or more applications on the first circuitry based the on the migrated second copy of memory contents and the second computational state.

13. The method of claim 10, comprising:
receiving a memory request from the second device based on a cache miss to the second near memory;
causing a concurrent lookup of both the first near memory and the first far memory to locate data associated with the memory request;
determining whether the data is located at the first near memory;
canceling the lookup to the first far memory if the data is located at the first near memory; and
sending the data over the wired or wireless interconnect to fulfill the memory request.

14. At least one machine readable medium comprising a plurality of instructions that in response to being executed on a first device having first circuitry causes the first device to:
detect an indication that a second device having second circuitry has connected to the first device via a wired or wireless interconnect, the first and the second circuitry each capable of executing one or more applications using a hierarchical memory architecture having a near memory and a far memory;
receive over the wired or wireless interconnect a copy of memory contents and a computational state associated with the second circuitry's execution of the one or more applications, the copy of memory contents and the computational state received from a second near memory at the second device over the wired or wireless interconnect;
store the copy of memory contents and the computational state to a first near memory at the first device for the first circuitry to execute the one or more applications;
send, on a periodic basis, data copied from dirty blocks at the first near memory to the second near memory over the wired or wireless interconnect;
receive a cache miss indication for the first near memory during execution of the one or more applications by the first circuitry;
send a memory request to the second device to obtain data associated with the cache miss that is maintained in one of a first far memory at the second device or the second near memory;
receive the data from the second device; and
store the data to the first near memory,
wherein the first and second near memories each have a lower latency than the first far memory.

## Patentansprüche

1. Vorrichtung (800), die Folgendes umfasst:
eine erste Schaltungsanordnung (220) bei einer ersten Vorrichtung (205), die unter Verwendung einer hierarchischen Speicherarchitektur, die einen ersten nahen Speicher (240) und einen ersten fernen Speicher (245), die bei der ersten Vorrichtung unterhalten werden, enthält, in der Lage ist, eine oder mehrere Anwendungen auszuführen, wobei der erste nahe Speicher (240) eine niedrigere Latenzzeit als der erste ferne Speicher (245) aufweist;
eine Detektionslogik (882-1) zum Detektieren einer zweiten Schaltungsanordnung bei einer zweiten Vorrichtung (255), die unter Verwendung einer hierarchischen Speicherarchitektur, die außerdem einen zweiten nahen Speicher, der bei der zweiten Vorrichtung unterhalten wird, enthält, in der Lage ist, die eine oder die mehreren Anwendungen auszuführen, wobei der zweite nahe Speicher eine niedrigere Latenzzeit als der erste ferne Speicher (245) aufweist;
eine Migrationslogik (822-2), um zu veranlassen, dass eine Kopie von Speicherinhalten und eines Rechenzustands, die der Ausführung der einen oder mehreren Anwendungen, die über eine verdrahtete oder drahtlose Verbindung von dem ersten nahen Speicher zu dem zweiten nahen Speicher migriert werden sollen, durch die erste Schaltungsanordnung zugeordnet sind, damit die zweite Schaltungsanordnung die eine oder die mehreren Anwendungen ausführt; und
eine Pufferlogik (822-3), um den ersten nahen Speicher dafür zu konfigurieren, als ein Puffer zu fungieren, der in der Lage ist, periodisch Daten zu empfangen, die von verfälschten Blöcken in dem zweiten nahen Speicher kopiert werden.

2. Vorrichtung nach Anspruch 1, die Folgendes umfasst:
eine Empfangslogik (822-4) zum periodischen Empfangen der Daten von dem zweiten nahen Speicher über die verdrahtete oder drahtlose Verbindung, zum Speichern der Daten in einer ersten Menge eines oder mehrerer Blöcke in dem ersten nahen Speicher und zum Kennzeichnen der ersten Menge als verfälschte Blöcke; und
eine Kopierlogik (822-5) zum Kopieren von Daten, die in der ersten Menge gespeichert sind, in den ersten fernen Speicher und zum Kennzeichnen der ersten Menge eines oder mehrerer Blöcke als fehlerfrei nach dem Kopieren in den ersten fernen Speicher.

3. Vorrichtung nach Anspruch 2, wobei die Empfangslogik zum Empfangen von Daten, die von verfälschten Blöcken in dem zweiten nahen Speicher kopiert werden, umfasst, dass die Empfangslogik zuerst als Reaktion darauf, dass der erste nahe Speicher einen Kapazitätsschwellenwert erreicht, Blöcke des Speichers von dem ersten nahen Speicher, die als fehlerfreie Blöcke gekennzeichnet sind, räumt und Blöcke des Speichers, die als verfälscht gekennzeichnet sind, gemäß einer Richtlinie für die Räumung verfälschter Blöcke aus dem ersten nahen Speicher räumt, falls alle fehlerfreien Blöcke geräumt worden sind und beim Empfang der Daten, die von den verfälschten Blöcken in den zweiten nahen Speicher kopiert werden, der Kapazitätsschwellenwert noch erreicht wird.

4. Vorrichtung nach Anspruch 2, die Folgendes umfasst:
den ersten nahen Speicher, der einen flüchtigen Speicher enthält, und den ersten fernen Speicher, der einen nichtflüchtigen Speicher enthält; und
eine Leistungslogik (822-7) zum Abschalten des ersten nahen Speicher auf einen Zustand niedrigerer Leistung, der eine Selbstauffrischungs-Leistungsbetriebsart enthält, nach dem Kopieren der empfangenen Daten in den ersten fernen Speicher durch die Kopierlogik.

5. Vorrichtung nach Anspruch 4, die Folgendes umfasst:
die Detektionslogik zum Empfangen einer Angabe, dass die verdrahtete oder drahtlose Verbindung mit der zweiten Schaltungsanordnung abgeschlossen werden soll;
die Leistungslogik zum Einschalten der ersten Schaltungsanordnung und des ersten nahen Speichers auf einen Zustand höherer Leistung;
die Empfangslogik zum Empfangen einer migrierten zweiten Kopie von Speicherinhalten und eines zweiten Rechenzustands, die der Ausführung der einen oder mehreren Anwendungen durch die zweite Schaltungsanordnung zugeordnet sind, in dem ersten nahen Speicher, wobei die zweite Kopie von Speicherinhalten und der zweite Rechenzustand von dem zweiten nahen Speicher über die verdrahtete oder drahtlose Verbindung gesendet werden;
die Kopierlogik zum Speichern wenigstens eines Abschnitts der zweiten Kopie von Speicherinhalten von dem zweiten nahen Speicher in dem ersten fernen Speicher; und
die erste Schaltungsanordnung zum Wiederaufnehmen der Ausführung der einen oder mehreren Anwendungen bei der ersten Vorrichtung auf der Grundlage der empfangenen zweiten Kopie von Speicherinhalten und des zweiten Rechenzustands.

6. Vorrichtung nach Anspruch 1, die Folgendes umfasst:
eine Anforderungslogik (822-6) zum Empfangen einer Speicheranforderung von der zweiten Vorrichtung auf der Grundlage eines Cache-Fehltreffers in dem zweiten nahen Speicher, wobei die Anforderungslogik zu Folgendem dient:
Veranlassen eines gleichzeitigen Nachschlagens sowohl in dem ersten nahen Speicher als auch in dem ersten fernen Speicher, um Daten aufzufinden, die der Speicheranforderung zugeordnet sind;
Bestimmen, ob sich die Daten in dem ersten nahen Speicher befinden;
Abbrechen des Nachschlagens in dem ersten fernen Speicher, falls sich die Daten in dem ersten nahen Speicher befinden; und
Senden der Daten über die verdrahtete oder drahtlose Verbindung, um die Speicheranforderung zu erfüllen.

7. Vorrichtung nach Anspruch 1, wobei die hierarchische Speicherarchitektur eine Zweiebenenspeicher-'2LM-'Architektur umfasst.

8. Vorrichtung nach Anspruch 1, wobei die erste Vorrichtung eine oder mehrere der ersten Vorrichtungen mit einer niedrigeren Wärmekapazität zum Ableiten von Wärme von der ersten Schaltungsanordnung im Vergleich zu einer höheren Wärmekapazität zum Ableiten von Wärme von der zweiten Schaltungsanordnung bei der zweiten Vorrichtung umfasst, wobei die erste Vorrichtung an Batterieleistung arbeitet oder wobei die erste Vorrichtung im Vergleich zu einer höheren Strombelastbarkeit für die Leistungsversorgung der zweiten Schaltungsanordnung bei der zweiten Vorrichtung eine niedrigere Strombelastbarkeit für die Leistungsversorgung der ersten Schaltungsanordnung aufweist.

9. Vorrichtung nach Anspruch 1, wobei die eine oder die mehreren Anwendungen eine wenigstens einer 4K-Auflösungs-Streaming-Videoanwendung, einer Anwendung zum Darstellen eines Bilds oder einer Grafik mit einer Auflösung von wenigstens 4K auf einer Anzeige, einer Spieleanwendung, die Video oder Grafik mit einer Auflösung von wenigstens 4K, wenn sie auf einer Anzeige dargestellt wird, enthält, einer Videobearbeitungsanwendung oder einer Berührungsbildschirmanwendung zur Benutzereingabe in eine mit der zweiten Schaltungsanordnung gekoppelte Anzeige mit Berührungseingabefähigkeiten umfassen.

10. Verfahren (900), das umfasst:
Ausführen (902) einer oder mehrerer Anwendungen in einer ersten Schaltungsanordnung bei einer ersten Vorrichtung, wobei die erste Schaltungsanordnung in der Lage ist, die eine oder die mehreren Anwendungen unter Verwendung einer hierarchischen Speicherarchitektur, die einen ersten nahen Speicher und einen ersten fernen Speicher, die bei der ersten Vorrichtung unterhalten werden, enthält, auszuführen, wobei der erste nahe Speicher eine niedrigere Latenzzeit als der erste ferne Speicher aufweist;
Detektieren (904) einer zweiten Vorrichtung mit einer zweiten Schaltungsanordnung, die unter Verwendung der hierarchischen Speicherarchitektur, die außerdem einen zweiten nahen Speicher, der bei der zweiten Vorrichtung unterhalten wird, enthält, in der Lage ist, die eine oder die mehreren Anwendungen auszuführen, wobei der zweite nahe Speicher eine niedrigere Latenzzeit als der erste ferne Speicher aufweist;
Migrieren (906) einer Kopie von Speicherinhalten und eines Rechenzustands, die der Ausführung der einen oder mehreren Anwendungen durch die erste Schaltungsanordnung zugeordnet sind, über eine verdrahtete oder drahtlose Verbindung von dem ersten nahen Speicher zu dem zweiten nahen Speicher, wobei die Speicherinhalte und der Rechenzustand migriert werden, damit die zweite Schaltungsanordnung die eine oder die mehreren Anwendungen ausführt; und
Konfigurieren (908) des ersten nahen Speichers, damit er als ein Puffer fungiert, der in der Lage ist, über die verdrahtete oder drahtlose Verbindung periodisch Daten zu empfangen, die von verfälschten Blöcken in dem zweiten nahen Speicher kopiert werden.

11. Verfahren nach Anspruch 10, das Folgendes umfasst:
Kopieren (910) der periodisch empfangenen Daten von dem ersten nahen Speicher in den ersten fernen Speicher und Kennzeichnen eines oder mehrerer Blöcke des Speichers, die die empfangenen Daten speichern, als fehlerfreie Blöcke.

12. Verfahren nach Anspruch 10, das Folgendes umfasst:
der erste nahe Speicher enthält einen flüchtigen Speicher und der erste ferne Speicher enthält einen nichtflüchtigen Speicher;
Abschalten des ersten nahen Speichers in einen Zustand niedrigerer Leistung, der eine Selbstauffrischungs-Leistungsbetriebsart enthält, nach dem Kopieren der empfangenen Daten in den ersten fernen Speicher;
Empfangen einer Angabe, dass die verdrahtete oder drahtlose Verbindung mit der zweiten Schaltungsanordnung abgeschlossen werden soll;
Einschalten der ersten Schaltungsanordnung und des ersten nahen Speichers in einen Zustand höherer Leistung;
Empfangen einer migrierten zweiten Kopie von Speicherinhalten und eines zweiten Rechenzustands, die der Ausführung der einen oder mehreren Anwendungen durch die zweite Schaltungsanordnung zugeordnet sind, in dem ersten nahen Speicher, wobei die zweite Kopie von Speicherinhalten und des zweiten Rechenzustands von dem zweiten nahen Speicher über die verdrahtete oder drahtlose Verbindung empfangen wird;
Speichern wenigstens eines Abschnitts der zweiten Kopie von Speicherinhalten von dem zweiten nahen Speicher in dem ersten fernen Speicher; und
Wiederaufnehmen der Ausführung der einen oder mehreren Anwendungen in der ersten Schaltungsanordnung auf der Grundlage der migrierten zweiten Kopie von Speicherinhalten und des zweiten Rechenzustands.

13. Verfahren nach Anspruch 10, das Folgendes umfasst:
Empfangen einer Speicheranforderung von der zweiten Vorrichtung auf der Grundlage eines Cache-Fehltreffers in dem zweiten nahen Speicher;
Veranlassen eines gleichzeitigen Nachschlagens sowohl in dem ersten nahen Speicher als auch in dem ersten fernen Speicher, um Daten aufzufinden, die der Speicheranforderung zugeordnet sind;
Bestimmen, ob sich die Daten in dem ersten nahen Speicher befinden;
Abbrechen des Nachschlagens in dem ersten fernen Speicher, falls sich die Daten in dem ersten nahen Speicher befinden; und
Senden der Daten über die verdrahtete oder drahtlose Verbindung, um die Speicheranforderung zu erfüllen.

14. Wenigstens ein maschinenlesbares Medium, das mehrere Anweisungen umfasst, die in Reaktion darauf, dass sie in einer ersten Vorrichtung ausgeführt werden, veranlassen, dass die erste Schaltungsanordnung veranlasst, dass die erste Vorrichtung Folgendes ausführt:
Detektieren einer Angabe, dass sich eine zweite Vorrichtung mit einer zweiten Schaltungsanordnung über eine verdrahtete oder drahtlose Verbindung mit der ersten Vorrichtung verbunden hat, wobei die erste und die zweite Schaltungsanordnung jeweils in der Lage sind, unter Verwendung einer hierarchischen Speicherarchitektur mit einem nahen Speicher und mit einem fernen Speicher eine oder mehrere Anwendungen auszuführen;
Empfangen einer Kopie von Speicherinhalten und eines Rechenzustands, die der Ausführung der einen oder mehreren Anwendungen durch die zweite Schaltungsanordnung zugeordnet sind, über die verdrahtete oder drahtlose Verbindung, wobei die Kopie der Speicherinhalte und des Rechenzustands über die verdrahtete oder drahtlose Verbindung von einem zweiten nahen Speicher bei der zweiten Vorrichtung empfangen wird;
Speichern der Kopie der Speicherinhalte und des Rechenzustands in einem ersten nahen Speicher bei der ersten Vorrichtung, damit die erste Schaltungsanordnung die eine oder die mehreren Anwendungen ausführt;
Senden von Daten, die von verfälschten Blöcken in dem ersten nahen Speicher kopiert werden, über die verdrahtete oder drahtlose Verbindung an den zweiten nahen Speicher auf einer periodischen Grundlage;
Empfangen einer Cache-Fehltreffer-Angabe für den ersten nahen Speicher während der Ausführung der einen oder mehreren Anwendungen durch die erste Schaltungsanordnung;
Senden einer Speicheranforderung an die zweite Vorrichtung, um dem Cache-Fehltreffer zugeordnete Daten zu erhalten, die in einem ersten fernen Speicher bei der zweiten Vorrichtung oder in dem zweiten nahen Speicher unterhalten werden;
Empfangen der Daten von der zweiten Vorrichtung; und
Speichern der Daten in dem ersten nahen Speicher,
wobei der erste und der zweite nahe Speicher jeweils eine niedrigere Latenzzeit als der erste ferne Speicher aufweisen.

## Revendications

1. Appareil (800), comprenant :
un premier montage de circuits (220) au niveau d'un premier dispositif (205) apte à exécuter une ou plusieurs applications au moyen d'une architecture mémoire hiérarchique comportant une première mémoire proche (240) et une première mémoire distante (245) détenues au niveau du premier dispositif, la première mémoire proche (240) présentant une latence inférieure à celle de la première mémoire distante (245) ;
une logique de détection (882-1) destinée à détecter un deuxième montage de circuits au niveau d'un deuxième dispositif (255) apte à exécuter les une ou plusieurs applications au moyen de l'architecture mémoire hiérarchique qui comporte également une deuxième mémoire proche détenue au niveau du deuxième dispositif, la deuxième mémoire proche présentant une latence inférieure à celle de la première mémoire distante (245) ;
une logique de migration (822-2) destinée à faire migrer une copie de contenus mémoire et un état de calcul associé à l'exécution, par le premier montage de circuits, des une ou plusieurs applications, sur une interconnexion filaire ou sans fil, de la première mémoire proche vers la deuxième mémoire proche pour permettre au deuxième montage de circuits d'exécuter les une ou plusieurs applications ; et
une logique de tampon (822-3) destinée à configurer la première mémoire proche de façon à ce qu'elle fonctionne comme un tampon apte à recevoir périodiquement des données copiées depuis des blocs sales au niveau de la deuxième mémoire proche.

2. Appareil selon la revendication 1, comprenant :
une logique de réception (822-4) destinée à recevoir périodiquement les données depuis la deuxième mémoire proche sur l'interconnexion filaire ou sans fil, enregistrer les données dans un premier ensemble d'un ou de plusieurs blocs au niveau de la première mémoire proche et marquer le premier ensemble comme des blocs sales ; et
une logique de copie (822-5) destinée à copier des données enregistrées dans le premier ensemble vers le première mémoire distante et marquer le premier ensemble d'un ou de plusieurs blocs comme propre suite à la copie vers la première mémoire distante.

3. Appareil selon la revendication 2, la logique de réception destinée à recevoir des données copiées depuis des blocs sales au niveau de la deuxième mémoire proche comprenant la logique de réception destinée à d'abord évincer des blocs de mémoire de la première mémoire proche marqués comme des blocs propres lorsque la première mémoire proche atteint un seuil de capacité et évincer des blocs de mémoire marqués comme sales de la première mémoire proche selon une politique d'éviction de blocs sales si tous les blocs propres ont été évincés et le seuil de capacité continue d'être atteint lors de la réception des données copiées depuis les blocs sales au niveau de la deuxième mémoire proche.

4. Appareil selon la revendication 2, comprenant :
la première mémoire proche comportant une mémoire volatile et la première mémoire distante comportant une mémoire non volatile ; et
une logique d'alimentation (822-7) destinée à abaisser l'alimentation de la première mémoire proche à un état de plus faible alimentation qui comporte un mode d'alimentation à rafraîchissement automatique suite à la copie des données reçues vers la première mémoire distante par la logique de copie.

5. Appareil selon la revendication 4, comprenant :
la logique de détection destinée à recevoir une indication que l'interconnexion filaire ou sans fil avec le deuxième montage de circuits doit être coupée ;
la logique d'alimentation destinée à élever l'alimentation du premier montage de circuits et de la première mémoire proche à un état d'alimentation plus élevé ;
la logique de réception destinée à recevoir, au niveau de la première mémoire proche, une deuxième copie migrée de contenus mémoire et un deuxième état de calcul associé à l'exécution, par le deuxième montage de circuits, des une ou plusieurs applications, la deuxième copie de contenus mémoire et le deuxième état de calcul étant envoyés depuis la deuxième mémoire proche sur l'interconnexion filaire ou sans fil ;
la logique de copie destinée à enregistrer au moins une partie de la deuxième copie de contenus mémoire depuis la deuxième mémoire proche dans la première mémoire distante ; et
le premier montage de circuits destiné à reprendre l'exécution des une ou plusieurs applications au niveau du premier dispositif sur la base de la deuxième copie reçue de contenus mémoire et du deuxième état de calcul.

6. Appareil selon la revendication 1, comprenant :
une logique de requête (822-6) destinée à recevoir une requête mémoire depuis le deuxième dispositif sur la base d'un défaut de cache dans la deuxième mémoire proche, la logique de requête étant destinée à :
déclencher une recherche simultanée à la fois dans la première mémoire proche et dans la première mémoire distante dans le but de localiser des données associées à la requête mémoire ;
déterminer si les données sont localisées ou non dans la première mémoire proche ;
annuler la recherche dans la première mémoire distante si les données sont localisées dans première la mémoire proche ; et
envoyer les données sur l'interconnexion filaire ou sans fil afin de satisfaire à la requête mémoire.

7. Appareil selon la revendication 1, l'architecture mémoire hiérarchique comprenant une architecture de type mémoire à deux niveaux '2LM'.

8. Appareil selon la revendication 1, le premier dispositif comprenant le premier dispositif présentant une capacité thermique moins élevée pour la dissipation de la chaleur générée par le premier montage de circuits par rapport à une capacité thermique plus élevée pour la dissipation de la chaleur générée par le deuxième montage de circuits et/ou le premier dispositif fonctionnant sur une alimentation par batterie et/ou le premier dispositif présentant une tenue en courant moins grande pour l'alimentation du premier montage de circuits par rapport à une tenue en courant plus grande pour l'alimentation du deuxième montage de circuits au niveau du deuxième dispositif.

9. Appareil selon la revendication 1, les une ou plusieurs applications comprenant une application parmi une application vidéo à diffusion en flux continu d'une résolution d'au moins 4K, une application pour présenter sur un affichage une image ou un graphique d'une résolution d'au moins 4K, une application de jeu comportant de la vidéo ou des graphiques d'une résolution d'au moins 4K lorsqu'ils sont présentés sur un affichage, une application d'édition vidéo ou une application d'écran tactile permettant une entrée utilisateur sur un affichage couplé au deuxième montage de circuits doté de capacités d'entrée tactile.

10. Procédé (900), comprenant :
l'exécution (902), sur un premier montage de circuits au niveau du premier dispositif, d'une ou de plusieurs applications, le premier montage de circuits étant apte à exécuter les une ou plusieurs applications au moyen d'une architecture mémoire hiérarchique comportant une première mémoire proche et une première mémoire distante détenues au niveau du premier dispositif, la première mémoire proche présentant une latence inférieure à celle de la première mémoire distante ;
la détection (904) d'un deuxième dispositif doté d'un deuxième montage de circuits apte à exécuter les une ou plusieurs applications au moyen de l'architecture mémoire hiérarchique qui comporte également une deuxième mémoire proche détenue au niveau du deuxième dispositif, la deuxième mémoire proche présentant une latence inférieure à celle de la première mémoire distante ;
la migration (906) d'une copie de contenus mémoire et d'un état de calcul associé à l'exécution, par le premier montage de circuits, des une ou plusieurs applications, sur une interconnexion filaire ou sans fil, de la première mémoire proche vers la deuxième mémoire proche, les contenus mémoire et l'état de calcul étant migrés pour permettre au deuxième montage de circuits d'exécuter les une ou plusieurs applications ; et
la configuration (908) de la première mémoire proche de façon à ce qu'elle fonctionne comme un tampon apte à recevoir périodiquement, sur l'interconnexion filaire ou sans fil, des données copiées depuis des blocs sales au niveau de la deuxième mémoire proche.

11. Procédé selon la revendication 10, comprenant :
la copie (910) des données reçues périodiquement depuis la première mémoire proche vers la première mémoire distante et le marquage d'un ou de plusieurs blocs de mémoire dans lesquels sont enregistrées les données reçues comme des blocs propres.

12. Procédé selon la revendication 10, comprenant :
la première mémoire proche comportant une mémoire volatile et la première mémoire distante comportant une mémoire non volatile ;
l'abaissement de l'alimentation de la première mémoire proche à un état de plus faible alimentation qui comporte un mode d'alimentation à rafraîchissement automatique suite à la copie des données reçues vers la première mémoire distante ;
la réception d'une indication que l'interconnexion filaire ou sans fil avec le deuxième montage de circuits doit être coupée ;
l'élévation de l'alimentation du premier montage de circuits et de la première mémoire proche à un état d'alimentation plus élevé ;
la réception, au niveau de la première mémoire proche, d'une deuxième copie migrée de contenus mémoire et d'un deuxième état de calcul associé à l'exécution, par le deuxième montage de circuits, des une ou plusieurs applications, la deuxième copie de contenus mémoire et le deuxième état de calcul étant reçus depuis la deuxième mémoire proche sur l'interconnexion filaire ou sans fil ;
l'enregistrement d'au moins une partie de la deuxième copie de contenus mémoire depuis la deuxième mémoire proche dans la première mémoire distante ; et
la reprise de l'exécution des une ou plusieurs applications sur le premier montage de circuits sur la base de la deuxième copie migrée de contenus mémoire et du deuxième état de calcul.

13. Procédé selon la revendication 10, comprenant :
la réception d'une requête mémoire depuis le deuxième dispositif sur la base d'un défaut de cache dans la deuxième mémoire proche ;
le déclenchement d'une recherche simultanée à la fois dans la première mémoire proche et dans la première mémoire distante dans le but de localiser des données associées à la requête mémoire ;
la détermination si les données sont localisées ou non dans la première mémoire proche ;
l'annulation de la recherche dans la première mémoire distante si les données sont localisées dans la première mémoire proche ; et
l'envoi des données sur l'interconnexion filaire ou sans fil afin de satisfaire à la requête mémoire.

14. Support(s) lisible(s) par machine, comprenant une pluralité d'instructions qui, une fois exécutées sur un premier dispositif doté d'un premier montage de circuits, amènent le premier dispositif à :
détecter une indication qu'un deuxième dispositif doté d'un deuxième montage de circuits s'est connecté au premier dispositif par le biais d'une interconnexion filaire ou sans fil, les premier et deuxième montages de circuits étant chacun aptes à exécuter une ou plusieurs applications au moyen d'une architecture mémoire hiérarchique dotée d'une mémoire proche et d'une mémoire distante ;
recevoir, sur l'interconnexion filaire ou sans fil, une copie de contenus mémoire et un état de calcul associé à l'exécution, par le deuxième montage de circuits, des une ou plusieurs applications, la copie de contenus mémoire et l'état de calcul étant reçus depuis une deuxième mémoire proche au niveau du deuxième dispositif sur l'interconnexion filaire ou sans fil ;
enregistrer la copie de contenus mémoire et l'état de calcul dans une première mémoire proche au niveau du premier dispositif pour permettre au premier montage de circuits d'exécuter les une ou plusieurs applications ;
envoyer périodiquement des données copiées depuis des blocs sales au niveau de la première mémoire proche à la deuxième mémoire proche sur l'interconnexion filaire ou sans fil ;
recevoir une indication de défaut de cache pour la première mémoire proche au cours de l'exécution des une ou plusieurs applications par le premier montage de circuits ;
envoyer une requête mémoire au deuxième dispositif afin d'obtenir des données associées au défaut de cache détenues soit dans une première mémoire distante au niveau du deuxième dispositif, soit dans la deuxième mémoire proche ;
recevoir les données depuis le deuxième dispositif ; et
enregistrer les données dans la première mémoire proche,
les première et deuxième mémoires proches présentant chacune une latence inférieure à celle de la première mémoire distante.
